(19)

Europäisches
Patentamt
European
Patent Office
Office européen
des brevets

(11) **EP 4 636 839 A2**

(12) **EUROPEAN PATENT APPLICATION**

(43) Date of publication:
**22.10.2025 Bulletin 2025/43**

(21) Application number: **25165978.5**

(22) Date of filing: **25.03.2025**

(51) International Patent Classification (IPC):
$H01M\ 4/131^{(2010.01)}$    $H01M\ 4/1391^{(2010.01)}$
$H01M\ 4/485^{(2010.01)}$    $H01M\ 4/50^{(2010.01)}$
$H01M\ 4/52^{(2010.01)}$    $H01M\ 10/0525^{(2010.01)}$
$H01M\ 4/36^{(2006.01)}$    $H01M\ 4/02^{(2006.01)}$

(52) Cooperative Patent Classification (CPC):
**H01M 4/131; H01M 4/1391; H01M 4/364;**
**H01M 4/485; H01M 4/50; H01M 4/52;**
**H01M 10/0525;** H01M 2004/027

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **28.03.2024 US 202463570839 P**

(71) Applicant: **Largan Precision Co. Ltd.**
**Taichung City 408 (TW)**

(72) Inventors:
• **CHEN, Po-Tsun**
**Taichung City 408 (TW)**

• **HUANG, Shih Yu**
**Taichung City 408 (TW)**
• **TSAI, Ying Chia**
**Taichung City 408 (TW)**
• **TSAI, Cheng-Yu**
**Taichung City 408 (TW)**
• **TENG, Chun-Hung**
**Taichung City 408 (TW)**

(74) Representative: **Lippert Stachow Patentanwälte**
**Rechtsanwälte**
**Partnerschaft mbB**
**Frankenforster Strasse 135-137**
**51427 Bergisch Gladbach (DE)**

(54) **COMPOSITION, ANODE AND BATTERY**

(57) A composition includes a component particle and a dispersed particle, and the component particle and the dispersed particle are respectively an active material. The component particle includes a niobium-titanium complex oxide, and the niobium-titanium complex oxide includes a niobium element and a titanium element. The dispersed particle includes a structural element oxide, the structural element oxide includes a structural element, and the structural element is selected at least two from a group consisting of a cobalt, a copper, a tin, a silicon, an iron, a manganese and a nickel.

Fig. 4A

**EP 4 636 839 A2**

**Description**

**BACKGROUND**

Technical Field

The present disclosure relates to a composition, an anode and a battery. More particularly, the present disclosure relates to a composition, an anode and a battery which can improve the safety, the cycle life, the stability and the electrical capacity of the battery.

Description of Related Art

The current goals of research and development of batteries are to achieve the demands of high energy density, high working voltage, fast charging speed and long cycle life. The commonly used materials for anodes are carbon or graphite nowadays. However, in the cycle process of high current, the carbon or graphite, which mostly has a layered structure, cannot withstand the rapid intercalation and deintercalation of ions. Therefore, it is prone to cause an irreversible collapse of the structure, resulting in reducing the electrical capacity and the storage life. Further, when the current density is too high, it is also prone to cause the polarization, which makes the lithium ion be reduced to the lithium metal and form the lithium dendrites on the surface of the electrode pieces, resulting in short circuit in the battery and the safety concerns.

Further, the theoretical energy density of the graphite is far lower than the requirement of kinetic energy of large electric devices, such as electric cars. Therefore, the silicon material with high energy density is introduced to be a new anode material, and it has become a trend in the development of the lithium batteries in the future. However, it is shown in the studies that when a battery including the silicon material undergoes several charge-discharge cycles, the volume of the anode will extremely change and the material will even crack because the lithium ions are repeatedly intercalated and moved out from the silicon materials. Thus, the structural stability of the anode is seriously affected, resulting in a significant loss of battery life.

**SUMMARY**

According to one aspect of the present disclosure, a composition includes a component particle and a dispersed particle, and the component particle and the dispersed particle are respectively an active material. The component particle includes a niobium-titanium complex oxide, and the niobium-titanium complex oxide includes a niobium element and a titanium element. The dispersed particle includes a structural element oxide, the structural element oxide includes a structural element, and the structural element is selected at least two from a group consisting of a cobalt, a copper, a tin, a silicon, an iron, a manganese and a nickel.

According to the composition of the aforementioned aspect, the composition can include at least two oxidation peaks or at least two reduction peaks in a voltage range of 0.05 V to 4.00 V.

According to the composition of the aforementioned aspect, when a weight ratio of the component particle in the composition is pWtn, and a weight ratio of the dispersed particle in the composition is pWen, the following condition can be satisfied: $0.20 \leq pWtn/pWen \leq 5.00$.

According to the composition of the aforementioned aspect, when a cumulative particle size of the component particle is tnD50, and a cumulative particle size of the dispersed particle is enD50, the following condition can be satisfied: $0.05 \leq Log(tnD50/enD50) \leq 2.50$.

According to the composition of the aforementioned aspect, the structural element can be selected at least two of the copper, the tin, the silicon, the iron and the manganese.

According to the composition of the aforementioned aspect, the structural element can be selected at least three of the copper, the tin, the silicon, the iron and the manganese.

According to another aspect of the present disclosure, an anode includes an anode material including the composition according to the aforementioned aspect and a conductive agent.

According to the anode of the aforementioned aspect, when a weight ratio of the composition in the anode material is pWo, and a weight ratio of the conductive agent in the anode material is pWc, the following condition can be satisfied: $2.80 \leq pWo/pWc \leq 3.80$.

According to the anode of the aforementioned aspect, the anode material can include at least two oxidation peaks or at least two reduction peaks in a voltage range of 0.20 V to 3.00 V.

According to the anode of the aforementioned aspect, the anode material can include at least two oxidation peaks in a voltage range of 1.00 V to 2.50 V, and the anode material can include at least two reduction peaks in a voltage range of 0.20 V to 2.00 V.

According to the anode of the aforementioned aspect, when a peak value of a first oxidation peak of the anode material is Ipa1, and a peak value of a second oxidation peak of the anode material is Ipa2, the following condition can be satisfied: $0.50 \leq$ Ipa1/Ipa2 $\leq 5.00$.

According to the anode of the aforementioned aspect, when a peak value of a first reduction peak of the anode material is Ipc1, and a peak value of a second reduction peak of the anode material is Ipc2, the following condition can be satisfied: $1.50 \leq$ Ipc1/Ipc2 $\leq 8.00$.

According to the anode of the aforementioned aspect, when a density of the anode material is DSan, and the following condition can be satisfied: $0.40$ g/cm$^3 \leq$ DSan $\leq 1.80$ g/cm$^3$.

According to the anode of the aforementioned aspect, when a thickness of the anode material is THan, and an electric resistance of the anode material is Ran, the following conditions can be satisfied: $1.0$ $\mu$m $\leq$ THan $\leq 70.0$ $\mu$m; and $0.50$ m$\Omega \leq$ Ran $\leq 50.00$ m$\Omega$.

According to further another aspect of the present disclosure, a battery includes the anode according to the aforementioned aspect.

According to the battery of the aforementioned aspect, when a discharge volumetric capacity of a tenth cycle of the battery with a current of 1 C for charging and discharging is C1V10, and a discharge volumetric capacity of a one-hundredth cycle of the battery with the current of 1 C for charging and discharging is C1V100, the following condition can be satisfied: $0.50 \leq$ C1V100/C1V10 $\leq 1.80$.

According to the battery of the aforementioned aspect, when a discharge volumetric capacity of a tenth cycle of the battery with a current of 1 C for charging and discharging is C1V10, and a discharge volumetric capacity of a five-hundredth cycle of the battery with the current of 1 C for charging and discharging is C1V500, the following condition can be satisfied: $0.50 \leq$ C1V500/C1V10 $\leq 2.50$.

According to the battery of the aforementioned aspect, when a discharge volumetric capacity of a tenth cycle of the battery with a current of 4 C is C4V10, and a discharge volumetric capacity of a one-hundredth cycle of the battery with the current of 4 C for charging and discharging is C4V100, the following condition can be satisfied: $0.50 \leq$ C4V100/C4V10 $\leq 1.50$.

According to the battery of the aforementioned aspect, when a discharge volumetric capacity of a tenth cycle of the battery with a current of 6 C is C6V10, and a discharge volumetric capacity of a one-hundredth cycle of the battery with the current of 6 C for charging and discharging is C6V100, the following condition can be satisfied: $0.50 \leq$ C6V100/C6V10 $\leq 1.50$.

According to still another aspect of the present disclosure, a composition includes a component particle and a dispersed particle, and the component particle and the dispersed particle are respectively an active material. The component particle includes a niobium-titanium complex oxide, and the niobium-titanium complex oxide includes a niobium element and a titanium element. The dispersed particle includes a structural element complex oxide, and the structural element complex oxide includes at least three structural elements.

According to the composition of the aforementioned aspect, when a weight ratio of the component particle in the composition is pWtn, and a weight ratio of the dispersed particle in the composition is pWen, the following condition can be satisfied: $0.20 \leq$ pWtn/pWen $\leq 5.00$.

According to the composition of the aforementioned aspect, when an observed particle size of the component particle is SDtn, and an observed particle size of the dispersed particle is SDen, the following conditions can be satisfied: $0.50$ $\mu$m $\leq$ SDtn $\leq 50.00$ $\mu$m; and $0.01$ $\mu$m $\leq$ SDen $\leq 5.00$ $\mu$m.

According to the composition of the aforementioned aspect, the at least three structural elements can be selected from a group consisting of a cobalt, a copper, a tin, a silicon, an iron, a manganese and a nickel.

According to the composition of the aforementioned aspect, the structural element complex oxide can be selected at least one from a group consisting of a silicon-tin-iron complex oxide, a silicon-copper-manganese complex oxide, a tin-copper-cobalt complex oxide, a tin-manganese-nickel complex oxide, a copper-manganese-nickel complex oxide and a copper-tin-nickel complex oxide.

According to yet another aspect of the present disclosure, an anode includes an anode material including the composition according to the aforementioned aspect.

According to the anode of the aforementioned aspect, the anode material can include at least two oxidation peaks in a voltage range of 1.00 V to 2.50 V, and the anode material can include at least two reduction peaks in a voltage range of 0.20 V to 2.00 V.

According to the anode of the aforementioned aspect, when a voltage of a first oxidation peak of the anode material is Epa1, and the following condition can be satisfied: $1.50$ V $\leq$ Epa1 $\leq 2.00$ V.

According to the anode of the aforementioned aspect, when a voltage of a first reduction peak of the anode material is Epc1, and the following condition can be satisfied: $0.20$ V $\leq$ Epc1 $\leq 1.20$ V.

According to the anode of the aforementioned aspect, when a voltage of a first oxidation peak of the anode material is Epa1, and a voltage of a first reduction peak of the anode material is Epc1, the following condition can be satisfied: $0.40$ V $\leq$ Epa1-Epc1 $\leq 1.80$ V.

According to the anode of the aforementioned aspect, when a peak value of a first oxidation peak of the anode material is Ipa1, and a peak value of a first reduction peak of the anode material is Ipc1, the following condition can be satisfied: $0.30 \leq |Ipa1/Ipc1| \leq 1.50$.

According to more another aspect of the present disclosure, a battery includes the anode according to the aforementioned aspect.

According to the battery of the aforementioned aspect, when a discharge volumetric capacity of a one-hundredth cycle of the battery with a current of 1 C for charging and discharging is C1V100, and a discharge volumetric capacity of a one-hundredth cycle of the battery with a current of 4 C for charging and discharging is C4V100, the following condition can be satisfied: $0.50 \leq C4V100/C1V100 \leq 1.20$.

According to the battery of the aforementioned aspect, when a discharge volumetric capacity of a one-hundredth cycle of the battery with a current of 1 C for charging and discharging is C1V100, and a discharge volumetric capacity of a one-hundredth cycle of the battery with a current of 6 C for charging and discharging is C6V100, the following condition can be satisfied: $0.30 \leq C6V100/C1V100 \leq 1.20$.

## BRIEF DESCRIPTION OF THE DRAWINGS

The present disclosure can be more fully understood by reading the following detailed description of the embodiment, with reference made to the accompanying drawings as follows:

Fig. 1 is a diagram of charging and discharging voltage-electric quantity differential curve with a constant current of a battery according to Comparative example 1.

Fig. 2 is a diagram of charging and discharging voltage-electric quantity differential curve with a constant current of a battery according to Comparative example 2.

Fig. 3A is a scanning electron microscopy image of an anode of a battery according to Comparative example 3.

Fig. 3B is a discharge cycle diagram with a current of 1 C of the battery according to Comparative example 3.

Fig. 4A is a scanning electron microscopy image of a surface of a component particle of a battery according to Example 1.

Fig. 4B is a scanning electron microscopy image of a surface of a dispersed particle of the battery according to Example 1.

Fig. 4C is a diagram of charging and discharging voltage-electric quantity differential curve with a constant current of a battery according to Example 1.

Fig. 4D is a diagram of cubic differential curve of the battery during charging according to Example 1.

Fig. 4E is a diagram of cubic differential curve of the battery during discharging according to Example 1.

Fig. 4F is a scanning electron microscopy image of an anode of the battery according to Example 1.

Fig. 4G is a discharge cycle diagram with currents of 1 C, 4 C and 6 C of the battery according to Example 1.

## DETAILED DESCRIPTION

According to one embodiment of the present disclosure, a composition includes a component particle and a dispersed particle, and the component particle and the dispersed particle are respectively an active material. The component particle includes a niobium-titanium complex oxide, and the niobium-titanium complex oxide includes a niobium element and a titanium element. The dispersed particle includes a structural element oxide, the structural element oxide includes a structural element, and the structural element is selected at least two from a group consisting of a cobalt, a copper, a tin, a silicon, an iron, a manganese and a nickel. Therefore, the composition of the present disclosure is formed by the niobium-titanium complex oxide and the multi-element oxide and applied in the anode material, and by the arrangement that the multi-element oxides are evenly distributed around the niobium-titanium complex oxide, not only it is favorable for simplifying the manufacturing process thereof, but also the structure stability of the composition and the energy density can be enhanced. Further, by the arrangement that the composition is an oxide and has a high heat resistance, it is favorable for enhancing the safety and increasing the service life of the battery in the high temperature

environment. Further, the change of the crystal volume of the composition is small and the mechanical stability thereof is high during the oxidation-reduction reaction, so it is able to adapt to a larger current density and maintain the overall structural integrity, and the problem of poor battery cycle life caused by the structural damage can be avoided. Furthermore, by the arrangement that the various oxides of the composition have similar oxidation-reduction potentials, it is favorable for forming a more uniform solid electrolyte interface membrane during the charging and discharging process, so that the problem of the electrical capacity reduction and the overall impedance increase of the battery can be reduced, the formation of lithium dendrites can be avoided, and thus the use safety of the battery can be enhanced.

According to another embodiment of the present disclosure, a composition includes a component particle and a dispersed particle, and the component particle and the dispersed particle are respectively an active material. The component particle includes a niobium-titanium complex oxide, and a niobium-titanium complex oxide includes a niobium element and a titanium element. The dispersed particle includes a structural element complex oxide, and the structural element complex oxide includes at least three structural elements. Therefore, compared to the single-element oxide, the composition includes a variety of elements having similar oxidation-reduction potentials. Because the multi-element oxide has the application advantages of a higher richness of the oxidation-reduction reaction, a higher electrochemical activity, a higher conductivity, etc., the electrochemical performance of the materials can be improved, and it is favorable for enhancing the electrical capacity retention and an excellent cycle life.

According to the composition of the present disclosure, the composition can include at least two oxidation peaks or at least two reduction peaks in a voltage range of 0.05 V to 4.00 V. Therefore, by the arrangement that the composition includes the oxidation peaks or the reduction peaks in a specific range of voltage, the oxidation-reduction reaction thereof can have a higher richness, and it is favorable for enhancing the electrochemical performance of the materials.

According to the composition of the present disclosure, when a weight ratio of the component particle in the composition is pWtn, and a weight ratio of the dispersed particle in the composition is pWen, the following condition can be satisfied: $0.20 \leq pWtn/pWen \leq 5.00$. Therefore, by the arrangement that the component particle and the dispersed particle are mixed with a proper proportion, it is favorable for enhancing the charging efficiency and the energy density of the battery. Furthermore, the following condition can be satisfied: $0.25 \leq pWtn/pWen \leq 4.00$. Furthermore, the following condition can be satisfied: $0.30 \leq pWtn/pWen \leq 3.50$. Furthermore, the following condition can be satisfied: $0.35 \leq pWtn/pWen \leq 3.00$. Furthermore, the following condition can be satisfied: $0.38 \leq pWtn/pWen \leq 2.80$. Furthermore, the following condition can be satisfied: $0.40 \leq pWtn/pWen \leq 2.50$. Furthermore, the following condition can be satisfied: $0.40 \leq pWtn/pWen \leq 0.60$. Furthermore, the following condition can be satisfied: $0.85 \leq pWtn/pWen \leq 1.15$. Furthermore, the following condition can be satisfied: $2.25 \leq pWtn/pWen \leq 2.50$.

According to the composition of the present disclosure, when a cumulative particle size of the component particle is tnD50, and a cumulative particle size of the dispersed particle is enD50, and the following condition can be satisfied: $0.05 \leq Log(tnD50/enD50) \leq 2.50$. Therefore, by the arrangement that the size of the component particle and the size of the dispersed particle have a proper size ratio there between, it is favorable for the dispersed particle to be more evenly dispersed, and the contacting area thereof to the component particle can be increased. Furthermore, the following condition can be satisfied: $0.10 \leq Log(tnD50/enD50) \leq 2.30$. Furthermore, the following condition can be satisfied: $0.20 \leq Log(tnD50/enD50) \leq 2.00$. Furthermore, the following condition can be satisfied: $0.30 \leq Log(tnD50/enD50) \leq 1.80$. Furthermore, the following condition can be satisfied: $0.40 \leq Log(tnD50/enD50) \leq 1.60$. Furthermore, the following condition can be satisfied: $0.50 \leq Log(tnD50/enD50) \leq 1.50$.

According to the composition of the present disclosure, when the cumulative particle size of the component particle is tnD50, the following condition can be satisfied: $0.50 \ \mu m \leq tnD50 \leq 50.00 \ \mu m$. Therefore, by the arrangement that the cumulative particle size of the component particle satisfies a proper size, it is favorable for maintaining the structural stability of the component particle and increasing the service life of the battery. Furthermore, the following condition can be satisfied: $1.00 \ \mu m \leq tnD50 \leq 30.00 \ \mu m$. Furthermore, the following condition can be satisfied: $1.50 \ \mu m \leq tnD50 \leq 20.00 \ \mu m$. Furthermore, the following condition can be satisfied: $2.00 \ \mu m \leq tnD50 \leq 15.00 \ \mu m$. Furthermore, the following condition can be satisfied: $5.00 \ \mu m \leq tnD50 \leq 10.00 \ \mu m$.

According to the composition of the present disclosure, when the cumulative particle size of the dispersed particle is enD50, the following condition can be satisfied: $0.01 \ \mu m \leq enD50 \leq 5.00 \ \mu m$. Therefore, by the arrangement that the cumulative particle size of the dispersed particle satisfies a proper size, it is favorable for increasing the dispersibility of the dispersed particle and thus enhancing the energy density. Furthermore, the following condition can be satisfied: $0.05 \ \mu m \leq enD50 \leq 4.00 \ \mu m$. Furthermore, the following condition can be satisfied: $0.10 \ \mu m \leq enD50 \leq 3.00 \ \mu m$. Furthermore, the following condition can be satisfied: $0.20 \ \mu m \leq enD50 \leq 2.50 \ \mu m$. Furthermore, the following condition can be satisfied: $0.30 \ \mu m \leq enD50 \leq 1.50 \ \mu m$.

According to the composition of the present disclosure, when an observed particle size of the component particle is SDtn, the following condition can be satisfied: $0.50 \ \mu m \leq SDtn \leq 50.00 \ \mu m$. Therefore, by the arrangement that the observed particle size of the component particle satisfies a proper size, it is favorable for increasing the structural integrity of the component particle. Furthermore, the following condition can be satisfied: $1.00 \ \mu m \leq SDtn \leq 35.00 \ \mu m$. Furthermore, the following condition can be satisfied: $1.50 \ \mu m \leq SDtn \leq 25.00 \ \mu m$. Furthermore, the following condition can be satisfied:

2.00 $\mu$m $\leq$ SDtn $\leq$ 20.00 $\mu$m. Furthermore, the following condition can be satisfied: 2.50 $\mu$m $\leq$ SDtn $\leq$ 18.00 $\mu$m. Furthermore, the following condition can be satisfied: 3.00 $\mu$m $\leq$ SDtn $\leq$ 15.00 $\mu$m.

According to the composition of the present disclosure, when an observed particle size of the dispersed particle is SDen, the following condition can be satisfied: 0.01 $\mu$m $\leq$ SDen $\leq$ 5.00 $\mu$m. Therefore, by the arrangement that the observed particle size of the dispersed particle satisfies a proper size, it is favorable for increasing the dispersibility of the dispersed particle and thus enhancing the energy density. Furthermore, the following condition can be satisfied: 0.03 $\mu$m $\leq$ SDen $\leq$ 4.00 $\mu$m. Furthermore, the following condition can be satisfied: 0.05 $\mu$m $\leq$ SDen $\leq$ 3.00 $\mu$m. Furthermore, the following condition can be satisfied: 0.10 $\mu$m $\leq$ SDen $\leq$ 2.50 $\mu$m. Furthermore, the following condition can be satisfied: 0.15 $\mu$m $\leq$ SDen $\leq$ 2.00 $\mu$m. Furthermore, the following condition can be satisfied: 0.20 $\mu$m $\leq$ SDen $\leq$ 1.50 $\mu$m. Furthermore, the following condition can be satisfied: 0.25 $\mu$m $\leq$ SDen $\leq$ 1.00 $\mu$m.

According to the composition of the present disclosure, the structural element of the structural element oxide can be selected at least two of the copper, the tin, the silicon, the iron and the manganese. Therefore, by the arrangement that the structural element oxide is composed of at least two of the specific elements, the physical and chemical advantages of each element can be combined, and it is favorable for enhancing the energy density.

According to the composition of the present disclosure, the structural element of the structural element oxide can be selected at least three of the copper, the tin, the silicon, the iron and the manganese. Therefore, by the arrangement that the structural element oxide is composed of at least three of the specific elements, compared to the single-element oxide, the composition of the multi-element oxide has more various oxidation-reduction reactions and a higher electrochemical activity.

According to the composition of the present disclosure, the structural element of the structural element complex oxide can be selected at least three from a group consisting of the cobalt, the copper, the tin, the silicon, the iron, the manganese and the nickel. Therefore, by the arrangement that structural element complex oxide is composed of at least three of the specific elements, compared to the single-element oxide, the composition of the multi-element oxide has more various oxidation-reduction reactions and a higher electrochemical activity.

According to the composition of the present disclosure, the structural element complex oxide can be selected at least one from a group consisting of a silicon-tin-iron complex oxide, a silicon-copper-manganese complex oxide, a tin-copper-cobalt complex oxide, a tin-manganese-nickel complex oxide, a copper-manganese-nickel complex oxide and a copper-tin-nickel complex oxide. Therefore, by the arrangement that the specific three-element complex oxide is used as one of the material of the composition, a bigger current density can be adapted and the overall structural integrity can be maintained, and it is favorable for increasing the cycle life of the battery.

According to further another embodiment of the present disclosure, an anode includes an anode material. The anode material includes the composition according to the aforementioned aspect and a conductive agent.

According to the anode of the present disclosure, when a weight ratio of the composition in the anode material is pWo, and a weight ratio of the conductive agent in the anode material is pWc, the following condition can be satisfied: 2.80 $\leq$ pWo/pWc $\leq$ 3.80. Therefore, by the arrangement that a proper ratio between the composition and the conductive agent is satisfied, it is favorable for maintaining the balance between the energy density and the enhancement of the conductivity. Furthermore, the following condition can be satisfied: 2.90 $\leq$ pWo/pWc $\leq$ 3.70. Furthermore, the following condition can be satisfied: 3.00 $\leq$ pWo/pWc $\leq$ 3.60. Furthermore, the following condition can be satisfied: 3.10 $\leq$ pWo/pWc $\leq$ 3.50. Furthermore, the following condition can be satisfied: 3.15 $\leq$ pWo/pWc $\leq$ 3.40. Furthermore, the following condition can be satisfied: 3.20 $\leq$ pWo/pWc $\leq$ 3.30.

According to the anode of the present disclosure, the anode material can include at least two oxidation peaks or at least two reduction peaks in a voltage range of 0.20 V to 3.00 V. Therefore, by the arrangement that the anode material includes the oxidation peaks or the reduction peaks in the specific voltage range, the oxidation-reduction reaction can have a higher richness, and it is favorable for enhancing the electrochemical performance of the materials.

According to the anode of the present disclosure, the anode material can include at least two oxidation peaks in a voltage range of 1.00 V to 2.50 V, and the anode material can include at least two reduction peaks in a voltage range of 0.20 V to 2.00 V. Therefore, by analyzing the plural oxidation peaks of the anode material in the charging process and the plural reduction peaks of the anode material in the discharging process, a higher electrochemical activity can be provided, and it is favorable for enhancing the electrical capacity retention.

According to the anode of the present disclosure, when a peak value of a first oxidation peak of the anode material is Ipa1, and a peak value of a second oxidation peak of the anode material is Ipa2, the following condition can be satisfied: 0.50 $\leq$ Ipa1/Ipa2 $\leq$ 5.00. Therefore, by calculating the ratio of the peak values of the first oxidation peak and the second oxidation peak, the two oxidation peaks have similar oxidation potentials, and it is favorable for reducing the problem of the increase of the impedance of the battery after multiple charges and discharges. Furthermore, the following condition can be satisfied: 0.60 $\leq$ Ipa1/Ipa2 $\leq$ 4.00. Furthermore, the following condition can be satisfied: 0.70 $\leq$ Ipa1/Ipa2 $\leq$ 3.50. Furthermore, the following condition can be satisfied: 0.80 $\leq$ Ipa1/Ipa2 $\leq$ 3.00. Furthermore, the following condition can be satisfied: 0.90 $\leq$ Ipa1/Ipa2 $\leq$ 2.80. Furthermore, the following condition can be satisfied: 1.00 $\leq$ Ipa1/Ipa2 $\leq$ 2.50.

According to the anode of the present disclosure, when a peak value of a first reduction peak of the anode material is Ipc1, and a peak value of a second reduction peak of the anode material is Ipc2, the following condition can be satisfied: $1.50 \leq Ipc1/Ipc2 \leq 8.00$. Therefore, by calculating the ratio of the peak values of the first reduction peak and the second reduction peak, the two reduction peaks have similar reduction potentials, and it is favorable for forming a more uniform SEI membrane and extending the service life of the battery. Furthermore, the following condition can be satisfied: $1.80 \leq Ipc1/Ipc2 \leq 7.00$. Furthermore, the following condition can be satisfied: $2.00 \leq Ipc1/Ipc2 \leq 6.00$. Furthermore, the following condition can be satisfied: $2.10 \leq Ipc1/Ipc2 \leq 5.50$. Furthermore, the following condition can be satisfied: $2.20 \leq Ipc1/Ipc2 \leq 5.00$. Furthermore, the following condition can be satisfied: $2.30 \leq Ipc1/Ipc2 \leq 4.50$.

According to the anode of the present disclosure, when a voltage of a first oxidation peak of the anode material is Epa1, the following condition can be satisfied: $1.50\,V \leq Epa1 \leq 2.00\,V$. Therefore, by analyzing the voltage of the first oxidation peak of the anode material, it is favorable for analyzing the elements that perform the best oxidation reaction and the transformation of the valence states thereof during the oxidation process, and thus the setting of the optimal charging working interval can be facilitated. Furthermore, the following condition can be satisfied: $1.55\,V \leq Epa1 \leq 1.95\,V$. Furthermore, the following condition can be satisfied: $1.60\,V \leq Epa1 \leq 1.90\,V$. Furthermore, the following condition can be satisfied: $1.65\,V \leq Epa1 \leq 1.85\,V$. Furthermore, the following condition can be satisfied: $1.68\,V \leq Epa1 \leq 1.82\,V$. Furthermore, the following condition can be satisfied: $1.70\,V \leq Epa1 \leq 1.80\,V$.

According to the anode of the present disclosure, when a voltage of a second oxidation peak of the anode material is Epa2, the following condition can be satisfied: $1.00\,V \leq Epa2 \leq 2.00\,V$. Therefore, by analyzing the voltage of the second oxidation peak of the anode material, the progress of the oxidation-reduction reaction can be maintained, and it is favorable for enhancing the Coulombic efficiency. Furthermore, the following condition can be satisfied: $1.10\,V \leq Epa2 \leq 1.90\,V$. Furthermore, the following condition can be satisfied: $1.20\,V \leq Epa2 \leq 1.80\,V$. Furthermore, the following condition can be satisfied: $1.30\,V \leq Epa2 \leq 1.75\,V$. Furthermore, the following condition can be satisfied: $1.40\,V \leq Epa2 \leq 1.70\,V$.

According to the anode of the present disclosure, when a voltage of a first reduction peak of the anode material is Epc1, the following condition can be satisfied: $0.20\,V \leq Epc1 \leq 1.20\,V$. Therefore, by analyzing the voltage of the first reduction peak of the anode material, it is favorable for analyzing the elements that perform the best reduction reaction and the transformation of the valence states thereof during the reduction process, and thus the setting of the optimal charging working interval can be facilitated. Furthermore, the following condition can be satisfied: $0.40\,V \leq Epc1 \leq 1.10\,V$. Furthermore, the following condition can be satisfied: $0.60\,V \leq Epc1 \leq 1.00\,V$. Furthermore, the following condition can be satisfied: $0.75\,V \leq Epc1 \leq 0.95\,V$. Furthermore, the following condition can be satisfied: $0.25\,V \leq Epc1 \leq 0.90\,V$. Furthermore, the following condition can be satisfied: $0.28\,V \leq Epc1 \leq 0.70\,V$. Furthermore, the following condition can be satisfied: $0.30\,V \leq Epc1 \leq 0.50\,V$.

According to the anode of the present disclosure, when a voltage of a second reduction peak of the anode material is Epc2, the following condition can be satisfied: $0.20\,V \leq Epc2 \leq 1.80\,V$. Therefore, by analyzing the voltage of the second reduction peak of the anode material, the progress of the oxidation-reduction reaction can be maintained, and it is favorable for enhancing the Coulombic efficiency. Furthermore, the following condition can be satisfied: $0.30\,V \leq Epc2 \leq 1.70\,V$. Furthermore, the following condition can be satisfied: $0.40\,V \leq Epc2 \leq 1.65\,V$. Furthermore, the following condition can be satisfied: $0.50\,V \leq Epc2 \leq 1.60\,V$. Furthermore, the following condition can be satisfied: $0.55\,V \leq Epc2 \leq 1.55\,V$.

According to the anode of the present disclosure, when the voltage of the first oxidation peak of the anode material is Epa1, and the voltage of the first reduction peak of the anode material is Epc1, the following condition can be satisfied: $0.40\,V \leq Epa1\text{-}Epc1 \leq 1.80\,V$. Therefore, by reducing the difference between the voltage of the first oxidation peak and the voltage of the first reduction peak of the anode material, it is favorable for increasing the reversibility of the electrochemical oxidation-reduction reaction. Furthermore, the following condition can be satisfied: $0.50\,V \leq Epa1\text{-}Epc1 \leq 1.70\,V$. Furthermore, the following condition can be satisfied: $0.60\,V \leq Epa1\text{-}Epc1 \leq 1.60\,V$. Furthermore, the following condition can be satisfied: $0.65\,V \leq Epa1\text{-}Epc1 \leq 1.55\,V$. Furthermore, the following condition can be satisfied: $0.70\,V \leq Epa1\text{-}Epc1 \leq 1.50\,V$. Furthermore, the following condition can be satisfied: $0.75\,V \leq Epa1\text{-}Epc1 \leq 1.45\,V$.

According to the anode of the present disclosure, when the peak value of the first oxidation peak of the anode material is Ipa1, and the peak value of the first reduction peak of the anode material is Ipc1, the following condition can be satisfied: $0.30 \leq |Ipa1/Ipc1| \leq 1.50$. Therefore, by reducing the ratio between the peak value of the first oxidation peak and the peak value of the first reduction peak of the anode material, the Coulombic efficiency during charging and discharging can be increased, and it is favorable for increasing the service life of the battery. Furthermore, the following condition can be satisfied: $0.35 \leq |Ipa1/Ipc1| \leq 1.30$. Furthermore, the following condition can be satisfied: $0.40 \leq |Ipa1/Ipc1| \leq 1.20$. Furthermore, the following condition can be satisfied: $0.45 \leq |Ipa1/Ipc1| \leq 1.10$. Furthermore, the following condition can be satisfied: $0.48 \leq |Ipa1/Ipc1| \leq 1.00$. Furthermore, the following condition can be satisfied: $0.50 \leq |Ipa1/Ipc1| \leq 0.95$.

According to the anode of the present disclosure, when a density of the anode material is DSan, the following condition can be satisfied: $0.40\,g/cm^3 \leq DSan \leq 1.80\,g/cm^3$. Therefore, by the arrangement that the anode material has a proper density, it is favorable for enhancing the energy density of the battery. Furthermore, the following condition can be satisfied: $0.45\,g/cm^3 \leq DSan \leq 1.60\,g/cm^3$. Furthermore, the following condition can be satisfied: $0.50\,g/cm^3 \leq DSan \leq 1.50\,g/cm^3$. Furthermore, the following condition can be satisfied: $0.53\,g/cm^3 \leq DSan \leq 1.40\,g/cm^3$. Furthermore, the following condition can be satisfied: $0.56\,g/cm^3 \leq DSan \leq 1.30\,g/cm^3$. Furthermore, the following condition can be satisfied: 0.60

g/cm$^3$ ≤ DSan ≤ 1.20 g/cm$^3$.

According to the anode of the present disclosure, when a thickness of the anode material is THan, and an electric resistance of the anode material is Ran, the following conditions can be satisfied: 1.0 μm ≤ THan ≤ 70.0 μm; and 0.50 mΩ ≤ Ran ≤ 50.00 mΩ. Therefore, under the conditions that the thickness of the anode material is maintained within a proper range and the electric resistance satisfies a proper range, it is favorable for maintaining the cycling stability of the battery. Furthermore, the following conditions can be satisfied: 3.0 μm ≤ THan ≤ 60.0 μm; and 0.60 mΩ ≤ Ran ≤ 40.00 mΩ. Furthermore, the following conditions can be satisfied: 5.0 μm ≤ THan ≤ 50.0 μm; and 0.70 mΩ ≤ Ran ≤ 20.00 mΩ. Furthermore, the following conditions can be satisfied: 7.0 μm ≤ THan ≤ 40.0 μm; and 0.80 mΩ ≤ Ran ≤ 10.00 mΩ. Furthermore, the following conditions can be satisfied: 8.0 μm ≤ THan ≤ 30.0 μm; and 0.90 mΩ ≤ Ran ≤ 5.00 mΩ. Furthermore, the following conditions can be satisfied: 10.0 μm ≤ THan ≤ 20.0 μm; and 0.95 mΩ ≤ Ran ≤ 3.00 mΩ.

According to still another embodiment of the present disclosure, a battery includes the anode according to the aforementioned aspect.

According to the battery of the present disclosure, when a discharge volumetric capacity of a tenth cycle of the battery with a current of 1 C for charging and discharging is C1V10, and a discharge volumetric capacity of a one-hundredth cycle of the battery with the current of 1 C for charging and discharging is C1V100, the following condition can be satisfied: 0.50 ≤ C1V100/C1V10 ≤ 1.80. Therefore, by comparing the difference of the capacities of the tenth cycle and the medium-term cycles of the battery, it is favorable for enhancing the durability of the battery. Furthermore, the following condition can be satisfied: 0.60 ≤ C1V100/C1V10 ≤ 1.60. Furthermore, the following condition can be satisfied: 0.70 ≤ C1V100/C1V10 ≤ 1.40. Furthermore, the following condition can be satisfied: 0.80 ≤ C1V100/C1V10 ≤ 1.30. Furthermore, the following condition can be satisfied: 0.90 ≤ C1V100/C1V10 ≤ 1.25. Furthermore, the following condition can be satisfied: 1.00 ≤ C1V100/C1V10 ≤ 1.20.

According to the battery of the present disclosure, when the discharge volumetric capacity of the tenth cycle of the battery with the current of 1 C for charging and discharging is C1V10, and a discharge volumetric capacity of a five-hundredth cycle of the battery with the current of 1 C for charging and discharging is C1V500, the following condition can be satisfied: 0.50 ≤ C1V500/C1V10 ≤ 2.50. Therefore, by comparing the difference of the capacities of the tenth cycle and the long-term cycles of the battery, it is favorable for enhancing the durability of the battery. Furthermore, the following condition can be satisfied: 0.60 ≤ C1V500/C1V10 ≤ 2.30. Furthermore, the following condition can be satisfied: 0.70 ≤ C1V500/C1V10 ≤ 2.10. Furthermore, the following condition can be satisfied: 0.80 ≤ C1V500/C1V10 ≤ 2.00. Furthermore, the following condition can be satisfied: 0.90 ≤ C1V500/C1V10 ≤ 1.90. Furthermore, the following condition can be satisfied: 1.00 ≤ C1V500/C1V10 ≤ 1.85.

According to the battery of the present disclosure, when a discharge volumetric capacity of a tenth cycle of the battery with a current of 4 C is C4V10, and a discharge volumetric capacity of a one-hundredth cycle of the battery with the current of 4 C for charging and discharging is C4V100, the following condition can be satisfied: 0.50 ≤ C4V100/C4V10 ≤ 1.50. Therefore, by comparing the difference of the capacities of the tenth cycle and the medium-term cycles of the battery with a larger current to charge and discharge, it is favorable for strengthening the battery life during the charge and discharge tests with a large current. Furthermore, the following condition can be satisfied: 0.60 ≤ C4V100/C4V10 ≤ 1.40. Furthermore, the following condition can be satisfied: 0.70 ≤ C4V100/C4V10 ≤ 1.30. Furthermore, the following condition can be satisfied: 0.80 ≤ C4V100/C4V10 ≤ 1.20. Furthermore, the following condition can be satisfied: 0.85 ≤ C4V100/C4V10 ≤ 1.15. Furthermore, the following condition can be satisfied: 0.90 ≤ C4V100/C4V10 ≤ 1.10.

According to the battery of the present disclosure, when a discharge volumetric capacity of a tenth cycle of the battery with a current of 6 C is C6V10, and a discharge volumetric capacity of a one-hundredth cycle of the battery with the current of 6 C for charging and discharging is C6V100, the following condition can be satisfied: 0.50 ≤ C6V100/C6V10 ≤ 1.50. Therefore, by comparing the difference of the capacities of the tenth cycle and the medium-term cycles of the battery with a larger current to charge and discharge, it is favorable for strengthening the high stability during the charge and discharge tests with a large current. Furthermore, the following condition can be satisfied: 0.60 ≤ C6V100/C6V10 ≤ 1.40. Furthermore, the following condition can be satisfied: 0.70 ≤ C6V100/C6V10 ≤ 1.30. Furthermore, the following condition can be satisfied: 0.75 ≤ C6V100/C6V10 ≤ 1.20. Furthermore, the following condition can be satisfied: 0.80 ≤ C6V100/C6V10 ≤ 1.10. Furthermore, the following condition can be satisfied: 0.85 ≤ C6V100/C6V10 ≤ 1.00.

According to the battery of the present disclosure, when the discharge volumetric capacity of the one-hundredth cycle of the battery with the current of 1 C for charging and discharging is C1V100, and the discharge volumetric capacity of the one-hundredth cycle of the battery with the current of 4 C for charging and discharging is C4V100, the following condition can be satisfied: 0.50 ≤ C4V100/C1V100 ≤ 1.20. Therefore, it is known from the charge and discharge tests of the battery with a large current that the composition used as the anode material has high chemical stability and high ion transfer ability, and it is favorable for strengthening the battery safety during fast charging. Furthermore, the following condition can be satisfied: 0.60 ≤ C4V100/C1V100 ≤ 1.15. Furthermore, the following condition can be satisfied: 0.70 ≤ C4V100/C1V100 ≤ 1.10. Furthermore, the following condition can be satisfied: 0.75 ≤ C4V100/C1V100 ≤ 1.05. Furthermore, the following condition can be satisfied: 0.80 ≤ C4V100/C1V100 ≤ 1.03. Furthermore, the following condition can be satisfied: 0.85 ≤ C4V100/C1V100 ≤ 1.00.

According to the battery of the present disclosure, when the discharge volumetric capacity of the one-hundredth cycle of the battery with the current of 1 C for charging and discharging is C1V100, and the discharge volumetric capacity of the one-hundredth cycle of the battery with the current of 6 C for charging and discharging is C6V100, the following condition can be satisfied: $0.30 \leq$ C6V100/C1V100 $\leq 1.20$. Therefore, it is known from the comparison between the electrical capacity in the charging and discharging process with a high current and the electrical capacity in the charging and discharging process with a low current that the composition used as the anode material is favorable for strengthening the rate performance of the battery. Furthermore, the following condition can be satisfied: $0.40 \leq$ C6V100/C1V100 $\leq 1.15$. Furthermore, the following condition can be satisfied: $0.45 \leq$ C6V100/C1V100 $\leq 1.10$. Furthermore, the following condition can be satisfied: $0.50 \leq$ C6V100/C1V100 $\leq 1.05$. Furthermore, the following condition can be satisfied: $0.55 \leq$ C6V100/C1V100 $\leq 1.00$. Furthermore, the following condition can be satisfied: $0.60 \leq$ C6V100/C1V100 $\leq 0.95$.

In the composition of the present disclosure, the surface of the component particle includes a porous structure, and the dispersed particle can be located in the porous structure on the surface of the component particle. The forming method of the composition is to add the component particle and the dispersed particle to a solution so as to form a colloidal solution. By the property that the size of the component particle is significantly larger than the size of the dispersed particle, the dispersed particle can be tightly distributed around the peripheral area of the component particle so as to form the composition. Further, an adhesive also can be added to the colloidal solution, and it is favorable for increasing the coverage of the dispersed particle distributed around the component particle. Furthermore, it also can be achieved by adjusting the electrolyte added to the solution or changing the pH value of the solution, etc., to change the electric property and the electric quantity of the component particle or the dispersed particle, and thus the component particle and the dispersed particle with different electric properties can attract each other in the solution.

The component particle of the present disclosure can include a niobium-titanium complex oxide, a lithium-titanium complex oxide or a niobium-vanadium complex oxide.

The dispersed particle of the present disclosure can be a mixed material, and the mixed material can include a structural element oxide, a tin-based alloy, a modified silicon material, a carbon-silicon material, a lithium-containing metal compound, a lithium-containing metal oxide, a metallic lithium, or a combination thereof, wherein the structural element oxide can include a structural element complex oxide and a structural element mixed oxide, and the modified silicon material can include a silicon material and an auxiliary material.

The active material of the present disclosure can refer that the active material participates in the oxidation-reduction reaction within the working voltage range of the battery. The differential capacity analysis (DCA) of the charging and discharging voltage with a constant current and the electric quantity can be used to determine whether the material is an active material or not. If the object is the active material, it includes an oxidation peak or a reduction peak within the working voltage range.

The niobium-titanium complex oxide of the present disclosure can include a non-doped niobium-titanium complex oxide and a doped niobium-titanium complex oxide. A constitution of the non-doped niobium-titanium complex oxide includes at least a niobium element, a titanium element and an oxygen element. The niobium-titanium complex oxide includes a plurality of compounds, which can be further represented by the following chemical formula:

$$Ti_xNb_yO_z;$$

wherein $z \leq 4x+5y$. For example, $TiNb_2O_7$, $Ti_2Nb_{10}O_{29}$, $TiNb_{14}O_{37}$ and $TiNb_{24}O_{62}$. A crystal structure of the niobium-titanium complex oxide can be a cubic crystal system, a monoclinic crystal system, an orthorhombic crystal system, a $ReO_3$-type lattice, a layered structure, etc. The doped niobium-titanium complex oxide can be selected at least one compound from the aforementioned non-doped niobium-titanium complex oxides, the at least one compound is doped with at least one doped element, and the doped niobium-titanium complex oxide can be further represented by the following chemical formula:

$$Ti_{(x-a)}M1_aNb_{(y-b)}M2_bO_{(z-c)}M3_c;$$

wherein M1, M2 and M3 are the doped elements, $0 \leq a < x$, $0 \leq b < y$, and $0 \leq c < z$. The change of the structure can be achieved by adjusting the element doped therein or the ratio of the doped ratio. Further, at least one of the auxiliary materials can be further selected to cover or fill a surface or pores of the niobium-titanium complex oxide.

The lithium-titanium complex oxide of the present disclosure can include a non-doped lithium-titanium complex oxide and a doped lithium-titanium complex oxide. The composition of the non-doped lithium-titanium complex oxide includes at least a lithium element, a titanium element and an oxygen element. The lithium-titanium complex oxide includes a plurality of compounds, such as $Li_4Ti_5O_{12}$, $LiTi_2O_4$, $Li_2Ti_3O_7$ and $Li_2TiO_3$. The doped lithium-titanium complex oxide can be selected at least one compound from the aforementioned non-doped lithium-titanium complex oxides, and the at least one compound is doped with at least one doped element. The change of the structure can be achieved by adjusting the element doped therein or the ratio of the doped ratio. Further, at least one of the auxiliary materials can be further selected to cover or fill a surface or pores of the lithium-titanium complex oxide.

The doped element of the present disclosure can be any element selected from Group IA, Group IIA, Group IVB, Group VB, Group VIB, Group VIIB, Group VIIIB, Group IB, Group IIB, Group IIIA, Group IVA, Group VA, Group VIA and Group VIIA. Further, it can be further selected from at least one of lithium, boron, fluorine, sodium, magnesium, aluminum, silicon, phosphorus, sulfur, chlorine, calcium, vanadium, chromium, manganese, iron, cobalt, nickel, copper, zinc, gallium, arsenic, bromine, zirconium, molybdenum, antimony, iodine, tantalum, tungsten and bismuth. By selecting the element with a high conductive property or the lighter element to be doped, it is favorable for enhancing the conductive property of the doped niobium-titanium complex oxide, so that the fast charging performance of the battery can be strengthened, and the energy density can be increased.

The structural element of the present disclosure can be a metallic element or a metalloid element. The metallic element can be any element selected from Group IA, Group IIA, Group IVB, Group VB, Group VIB, Group VIIB, Group VIIIB, Group IB, Group IIB, Group IIIA and Group IVA. The metalloid element can include boron, silicon, germanium, arsenic, antimony and tellurium. The structural element can be further selected from lithium, titanium, niobium, cobalt, copper, tin, silicon, iron, manganese and nickel.

The structural element complex oxide of the present disclosure can include a compound formed by at least two kinds of the structural element, such as a lithium-titanium complex oxide, a niobium-titanium complex oxide, a cobalt-copper complex oxide, a cobalt-tin complex oxide, a cobalt-silicon complex oxide, a cobalt-iron complex oxide, a cobalt-manganese complex oxide, a cobalt-nickel complex oxide, a copper-tin complex oxide, a copper-silicon complex oxide, a copper-iron complex oxide, a copper-manganese complex oxide, a copper-nickel complex oxide, a tin-silicon complex oxide, a tin-iron complex oxide, a tin-manganese complex oxide, a tin-nickel complex oxide, a silicon-iron complex oxide, a silicon-manganese complex oxide, a silicon-nickel complex oxide, an iron-manganese complex oxide, an iron-nickel complex oxide, and a manganese-nickel complex oxide. Further, the structural element complex oxide can include a compound formed by at least three of the aforementioned structural elements, such as a silicon-tin-iron complex oxide, a silicon-copper-manganese complex oxide, a tin-copper-cobalt complex oxide, a tin-manganese-nickel complex oxide, a copper-manganese-nickel complex oxide and a copper-tin-nickel complex oxide.

The structural element mixed oxide of the present disclosure can include the structural element. In particular, the structural element mixed oxide can be a mixture formed by at least two oxides including the structural element, such as the mixture formed by the tin oxide and the nickel oxide, the mixture formed by the tin oxide and the titanium oxide, the mixture formed by the tin oxide and the cobalt oxide, the mixture formed by the tin oxide and the manganese oxide, the mixture formed by the silicon oxide and the lithium oxide, the mixture formed by the silicon oxide and the titanium oxide, the mixture formed by the silicon oxide and the tin oxide, and the mixture formed by the silicon oxide and the iron oxide. Further, the structural element mixed oxide can be a mixture formed by at least three oxides including the structural element, such as the mixture formed by the silicon oxide, the tin oxide and the iron oxide, the mixture formed by the silicon oxide, the copper oxide and the manganese oxide, the mixture formed by the tin oxide, the copper oxide and the cobalt oxide, the mixture formed by the tin oxide, the manganese oxide and the nickel oxide, the mixture formed by the copper oxide, the manganese oxide and the nickel oxide, and the mixture formed by the copper oxide, the tin oxide and the nickel oxide.

The tin-based alloy of the present disclosure can include a tin-phosphorus alloy, a tin-sulfur alloy, a tin-antimony alloy, a tin-cobalt sulfur alloy, a tin-antimony sulfur alloy, and a tin-copper phosphorus alloy.

The modified silicon material of the present disclosure can include the silicon material and the auxiliary material, wherein the silicon material and the auxiliary material can form a mixture, the silicon material and the auxiliary material can also form chemical bonds there between, and the silicon material and the auxiliary material can also form a layered structure. Further, the auxiliary material can be selected to a polymer. The polymer can form the layered structure around the peripheral area of the silicon material by a chemical bonding method or a physical mixing method, wherein the polymer is polymerized from the at least two monomers, the at least two can include a first monomer and a second monomer, the first monomer includes a siloxane group, and the second monomer includes a carboxyl group or an ester group. The first monomer is closer to the silicon material than the second monomer. The polymer can be formed by the covalent bonding of the addition polymerization and copolymerization of the first monomer including an unsaturated alkenyl group or an acrylate group and the second monomer including an unsaturated alkenyl group or an unsaturated acrylate group, wherein a crosslinking agent can be further added to the polymer, so that the polymer being a linear form can be bound and crosslinked to each other so as to a crosslinking structure.

The silicon material of the present disclosure can be a silicon, a silicon oxide, a silicon-carbon composite or a silicon alloy. The size of the silicon material at D50 is sD50, and the following condition can be satisfied: $10.0 \, nm \leq sD50 \leq 10000.0 \, nm$. Further, the following conditions can be satisfied: $10.0 \, nm \leq sD50 \leq 3000.0 \, nm$; $10.0 \, nm \leq sD50 \leq 2000.0 \, nm$; $10.0 \, nm \leq sD50 \leq 1000.0 \, nm$; $10.0 \, nm \leq sD50 \leq 500.0 \, nm$; $20.0 \, nm \leq sD50 \leq 400.0 \, nm$; $30.0 \, nm \leq sD50 \leq 300.0 \, nm$; $40.0 \, nm \leq sD50 \leq 250.0 \, nm$; $50.0 \, nm \leq sD50 \leq 200.0 \, nm$; $60.0 \, nm \leq sD50 \leq 150.0 \, nm$; or $70.0 \, nm \leq sD50 \leq 100.0 \, nm$. Further, sD50 can be 20 nm, 50 nm, 80 nm, 100 nm, 150 nm, 200 nm, 250 nm, 300 nm, 350 nm, 400 nm, 450 nm, 500 nm, 800 nm, 1000 nm, 1500 nm, 2000 nm, 2500 nm or 3000 nm.

The carbon active material of the present disclosure can be graphite, graphene, carbon microbeads, hard carbon or soft carbon.

The first monomer of the present disclosure can be a siloxy compound including at least one of alkenyl group (-C=C-), carbonyl group (-C=O), carboxyl group (-COOH), amide group (-CONH$_2$) or silyl enol ether, and the first monomer can include ethenyl(trimethoxy)silane, ethenyl(triethoxy)silane, ethenyl-dimethoxy-methylsilane, 2-(chloromethyl) prop-2-enyl-trimethoxysilane, [2-hydroxy-3-[3-[methyl-bis(trimethylsilyloxy)silyl]propoxy]propyl] 2-methylprop-2-enoate, 3-[dimethyl(trimethylsilyloxy)silyl]propyl 2-methylprop-2-enoate, 3-[methyl-bis(trimethylsilyloxy)silyl]propyl 2-methylprop-2-enoate, N-prop-2-enyl-3-trimethoxysilylpropan-1-amine, (3-isocyanatopropyl)-triethoxysilane, 1-[3-(trimethoxysilyl)propyl]urea, vinylmethylsiloxane-dimethylsiloxane silanol terminated copolymer. Further, the siloxy compound can further be but not limited to the following structure:

$$(R)_3\text{-Si-}(CH_2)_n\text{-X-}(CH_2)_m\text{-A};$$

wherein R is selected from a group consisting of methoxy group, ethoxy group and siloxy group, X is methyl group or oxygen, A is selected from a group consisting of ethenyl group, acrylate group and methacrylate group, and n and m satisfy the following condition: $0 \le n+m \le 10$. The siloxy compound can include triethoxysilylmethyl 2-methylprop-2-enoate, 2-Trimethylsilyloxyethyl 2-methylprop-2-enoate, 3-trimethoxysilylpropyl 2-methylprop-2-enoate (MPS), 4-trimethoxysilylbutyl 2-methylprop-2-enoate, 5-trimethoxysilylpentyl 2-methylprop-2-enoate, 6-trimethoxysilylhexyl 2-methylprop-2-enoate, 7-trimethoxysilylheptyl 2-methylprop-2-enoate, 8-trimethoxysilyloctyl 2-methylprop-2-enoate, 9-trimethoxysilylnonyl 2-methylprop-2-enoate, 10-trimethoxysilyldecyl 2-methylprop-2-enoate, tris(trimethylsilyloxy) silylmethyl 2-methylprop-2-enoate, 3-tris(trimethylsilyloxy)silylpropyl 2-methylprop-2-enoate. The siloxy compound can be processed by the hydrolysis reaction to include a silanol group (Si-OH) with activity and then performed by a condensation reaction with the silicon material (especially forming the silicon oxide on the surface by the oxidant) so as to form a siloxane with the structure of Si-O-Si. The Si-H bond on the surface of the silicon material can be oxidized into a silanol group (Si-OH), or the silicon can be oxidized into a silicon dioxide by the oxidant, and thus it is favorable for forming an oxidizing layer on the surface of the silicon material.

The second monomer of the present disclosure can include a carboxyl group or an ester group, such as 2-(dimethylamino)ethyl 2-methylprop-2-enoate (DMAEMA), methyl 2-methylprop-2-enoate (MMA), methyl prop-2-enoate (MA), 2-ethylhexyl prop-2-enoate (2EHA), prop-2-enoic acid (AA), 2-methylpropyl 2-methylprop-2-enoate (IBMA), benzyl 2-methylprop-2-enoate (BZMA), oxolan-2-ylmethyl prop-2-enoate (THFA), 2-(2-ethoxyethoxy)ethyl prop-2-enoate (EDGA), dodecyl prop-2-enoate (LA), or a composition of the aforementioned monomers.

The crosslinking agent of the present disclosure can be used to bind and crosslink the polymer being a linear form to each other so as to a crosslinking structure. The crosslinking agent can be any of the terminally ethylenically unsaturated compound, which can include: 2,2',2'',2'''-(ethane-1,2-diyldinitrilo)tetraacetic acid (EDTA), ethoxylated-9 trimethylolpropane triacrylate (TMP9EOTA), 2-(2-methylprop-2-enoyloxy)ethyl 2-methylprop-2-enoate, 2-[2-(2-methylprop-2-enoyloxy)ethoxy]ethyl 2-methylprop-2-enoate, 2-[2-[2-(2-methylprop-2-enoyloxy)ethoxy]ethoxylethyl 2-methylprop-2-enoate, 2-[2-[2-[2-(2-Methylprop-2-enoyloxy)ethoxy]ethoxy]ethoxy]ethyl 2-methylprop-2-enoate, prop-2-enyl 2-methylprop-2-enoate, 3-(2-methylprop-2-enoyloxy)propyl 2-methylprop-2-enoate, [2-methyl-3-(2-methylprop-2-enoyloxy) propyl] 2-methylprop-2-enoate, 4-(2-methylprop-2-enoyloxy)butyl 2-methylprop-2-enoate, and 6-(2-methylprop-2-enoyloxy) hexyl 2-methylprop-2-enoate.

The silicon-carbon composite of the present disclosure can include a layered structure of silicon surrounded by a carbon shell, a silicon-carbon yolk-shell structure and a porous structure. The layered structure of silicon surrounded by the carbon shell is formed by the pyrolysis in the absence of oxygen so as to cover the carbon shell on the peripheral area of the silicon material. The silicon-carbon yolk-shell structure is formed by generating a silicon oxide on the surface of the silicon and then a layer of carbon shell covers on the peripheral area of the silicon material by the pyrolysis in the absence of oxygen. Then, the silicon oxide is removed by the hydrofluoric acid (HF) to make the silicon particles break into tiny nano-particles. The porous structure is manufactured by the materials with low self-diffusion coefficients or adding foaming materials and then processed by sintering or electrochemical corrosion, so that the intermediate product is carbonized to form a silicon carbide ceramic porous material.

The carbon material of the present disclosure can be formed by carbonizing the carbon-containing precursor by the heat treatment. The carbon-containing precursor can include organic compounds, and the organic compounds can further include carbohydrates, asphalts or an organic polymer.

The carbon conductive material of the present disclosure can be graphite, carbon microbeads, carbon fibers, hard carbon, soft carbon, conductive graphite (KS6, SFG6), graphene, acetylene black, Ketjenblack, carbon black (Super P), or carbon nanotube (CNT).

The anode material of the present disclosure can include the composition and the auxiliary material.

The auxiliary material of the present disclosure include polymers, metals, alloys, non-metal oxides, metal oxides, fluorides, organic compounds, adhesives, conductive agent or additives.

The adhesive of the present disclosure can be poly(1,1-difluoroethylene) (PVDF), styrene-butadiene rubber (SBR), poly(methylene) (PE), poly(ethenol) (PVA), poly(1-ethenylpyrrolidin-2-one) (PVP), poly(1-methylethylene) (PP), poly(1-acrylonitrile) (PAN), carboxymethyl cellulose (CMC), poly(1,1,2,2-tetrafluoroethylene) (PTFE), ethylene propylene diene monomer (EPDM), hypalon polyethlene pubber (CSM), or alginic acid made of the mono alduronic acid by linear polymerization.

The conductive agent of the present disclosure can be graphite, conductive graphite (KS6, SFG6), graphene, acetylene black, Ketjenblack, carbon black (Super P), carbon nanotube (CNT), carbon microbeads, carbon fibers, hard carbon, soft carbon, aluminium powder, nickel powder, titanium dioxide, potassium hexatitanate (PHT), or a combination thereof.

The anode piece of the present disclosure can be manufactured by the methods of coating on single layer or double layers, vacuum coating or composite structures.

The cathode material of the present disclosure can be a lithium complex metal oxide including lithium or at least one metal, such as $LiFePO_4$, $LiMnO_2$, $LiMn_2O_4$, $LiCoO_2$, $LiNiO_2$, $LiNiCoO_2$, $LiNiMnO_4$, $LiCoMnO_2$, $LiCoMnO_4$, $LiNiCoMnO_2$, $LiNiCoMnO_4$, or a combination thereof. The aforementioned lithium complex metal oxide can have various oxidation states.

The electrolyte of the present disclosure can be composed of metal salts, additives and organic solvents. The composition ratio of the organic solvent is larger than the composition ratio of the additive, and the electrolyte can be liquid, colloidal or solid. The additive and the organic solvent of the electrolyte can be mixed physically, or at least one of the following additives and the organic solvent monomers can be selected as a precursor for polymerization.

The metal salt of the present disclosure can include the inorganic acid lithium salt such as $LiPF_6$, $LiBF_4$, $LiSbF_6$, $LiAsF_6$, $LiClO_4$, $LiC_4BO_8$, LiTFSI, LiFSI, $LiNO_3$, $LiGaCl_4$; the lithium sulfonate including fluorine such as $LiCF_3SO_3$, $LiN(C_2F_5SO_2)_2$, $LiN(CF_3SO_2)_2$, $LiC(CF_3SO_2)_3$; and $LiBF_2(C_2O_4)$ (LiDFOB), $LiB(C_2O_4)_2$ (LiBOB), or a combination thereof. The aforementioned metal salts can have various oxidation states.

The organic solvent of the present disclosure can be carbonate esters, carboxylate esters, ethers, sulfides or the combination thereof. The aforementioned organic solvents can also be used as the additives.

The additive of the present disclosure can be carbonate ester compounds, lactone cyclic esters, cyclic compounds including ether groups, aromatic compounds, phosphorus compounds, boron compounds, inorganic oxides, or a combination thereof. With a proper adding amount of the additive, it is favorable for enhancing the efficacy of the battery. For example, enhancing the composition of the SEI membrane, increasing the efficacy under high temperature and high voltage, enhancing the transmission ability of the ions, reducing the impedance of the electrolyte, increasing the stability of cycles, the integrity of the materials of the anode and the cathode, enhancing the electrochemical stability, etc.

The organic solvent of the present disclosure has a structure including polymerizable olefin groups, which can be used as the monomer of the second structural precursor. For example, it can be 2H-1,3-dioxol-2-one (vinylene carbonate; VC), 4-vinyl-1,3-dioxolan-2-one (vinylethylene carbonate; VEC), 1,3-dithiole-2-thione (vinylene trithiocarbonate), 2,5-dihydrothiophene-1,1-dioxide, 1-ethenylsulfonylethene, prop-1-ene-1,3-sultone, cyclic additives including ether groups, or additives of aromatic compounds.

The carbonate ester organic solvent of the present disclosure can be a compound in which some or all of the hydrogens of the hydroxyl group in the carbonic acid are substituted by an alkyl group, and the carbonate ester organic solvent can be divided to cyclic carbonate esters and linear carbonate esters. The linear carbonate ester can include dimethyl carbonate (DMC), diethyl carbonate (DEC), dipropyl carbonate (DPC), ethyl methyl carbonate (EMC), methyl propyl carbonate (MPC), ethyl propyl carbonate (EPC), and methyl 2,2,2-trifluoroethyl carbonate (FEMC). The cyclic carbonate ester can include 1,3-dioxolan-2-one (ethylene carbonate; EC), 4-methyl-1,3-dioxolan-2-one (propylene carbonate; PC), 1,3-dioxan-2-one (trimethylene carbonate; TMC), 4-ethyl-1,3-dioxolan-2-one (1,2-butylene carbonate), (4R,5S)-4,5-dimethyl-1,3-dioxolan-2-one (cis-2,3-butylene carbonate), 1,2-pentylene carbonate, 2,3-pentylene carbonate, 2H-1,3-dioxol-2-one (vinylene carbonate; VC), 4-vinyl-1,3-dioxolan-2-one (vinylethylene carbonate; VEC), 4-fluoro-1,3-dioxolan-2-one (fluoroethylene carbonate; FEC), trans-4,5-difluoro-1,3-dioxolan-2-one (difluoroethylene carbonate; DFEC), 1,3-dithiole-2-thione (vinylene trithiocarbonate), or a combination thereof.

The carboxylate organic solvent of the present disclosure can be manufactured by the esterification reaction of alcohols and carboxyl acids, and the carboxylate organic solvent can be methyl acetate, ethyl acetate, propyl acetate, methyl propionate, ethyl propionate, propyl propionate, methyl butyrate, ethyl butyrate, lactone, or a combination thereof. The lactone can further include the structure of 1-oxacycloalkan-2-one, wherein the lactone is obtained from a compound including a hydroxyl group and a carboxylic acid, and the compound is condensed within the molecule so as to form a cyclic carboxylate monomer. According to the position of the hydroxyl group forming the ring and the number of carbon atoms in the ring, there can be many combinations, such as oxiran-2-one ($\alpha$-acetolactone), oxetan-2-one ($\beta$-propiolactone), oxolan-2-one ($\gamma$-butyrolactone), 5-methyloxolan-2-one ($\gamma$-valerolactone), oxan-2-on ($\sigma$-valerolactone), 5-ethyloxolan-2-one ($\gamma$-caprolactone), oxepan-2-one ($\epsilon$-caprolactone), D-glucono-1,5-lactone ($\delta$-gluconolactone), or a combination thereof.

The ether organic solvent of the present disclosure can be oxolane (THF), 2-methyloxolane (2-MeTHF), 1,3-dioxolane (DOL), 4-methyl-1,3-dioxolane (4-MeDOL), dimethoxymethane (DMM), 1,2-dimethoxyethane (DME), 2,2-dimethoxypropane (DMP), 1,2-bis(2-cyanoethoxy)ethane (DENE), 1-methoxy-2-(2-methoxyethoxy)ethane (DG),or a combination thereof.

The sulfide organic solvent of the present disclosure can be divided into compounds including sulfone group (-(O=)S(=O)-) or compounds including sulfonate group (-$SO_2O^-$). The compounds including sulfone group can include 2,5-dihydrothiophene-1,1-dioxide and 1-ethenylsulfonylethene. The compounds including sulfonate group can be further divided into mesylate ($CH_3SO_2O^-$), trifluoromethanesulfonate ($CF_3SO_2O^-$), p-toluenesulfonyl group (Tosyl), 1-methylsulfonyloxyethane, methyl 4-methylbenzenesulfonate, oxathiolane 2,2-dione, prop-1-ene-1,3-sultone, 1,3,2-dioxathiane 2,2-dioxide, or a combination thereof.

The lactone cyclic ester additive of the present disclosure can be a polycyclic diester monomer obtained by the esterification condensation of two identical or two different compounds including the hydroxy acid, and the lactone cyclic ester additive can include 1,4-dioxane-2,5-dione (glycolide), 3,6-dimethyl-1,4-dioxane-2,5-dione (lactide), or a combination thereof. Further, according to the stereoisomers formed based on differences in the spatial arrangement of atoms, the lactide can be further divided to (R,R)-3,6-dimethyl-1,4-dioxane-2,5-dione (LL-lactide), (S,S)-3,6-dimethyl-1,4-dioxane-2,5-dione (DD-lactide), (meso)-3,6-dimethyl-1,4-dioxane-2,5-dione (DL-lactide). Further, the lactide also can be formed by the carboxylic acid compounds including hydroxyl groups, wherein the carboxylic acid compounds can be directly copolymerized to form polymers without ring-opening reaction, and the lactide can include 2-hydroxyacetic acid (glycolic acid), 3-hydroxypropanoic acid (lactic acid), 4-hydroxybutanoic acid, 5-hydroxyvaleric acid, or a combination thereof.

The cyclic compound additive including ether groups of the present disclosure can be the crown ether, wherein the crown ether is a molecule using the ethyleneoxy group (-$CH_2CH_2O$-) as the main repeating unit and can include 1,4,7-trioxonane (9-Crown-3), 1,4,7,10-tetraoxacyclododecane (12-Crown-4), 1,4,7,10,13-pentaoxacyclopentadecane (15-Crown-5), 1,4,7,10,13,16-hexaoxacyclooctadecane (18-Crown-6), 1,4,7,10,13,16,19-heptaoxacycloheneicosane (21-Crown-7), 6,7,9,10,17,18,20,21-octahydrodibenzo[b,k][1,4,7,10,13,16]hexaoxacyclooctade cine (dibenzo-18-crown-6), 1,4,10,13-tetraoxa-7,16-diazacyclooctadecane (diaza-18-crown-6), or a combination thereof.

The aromatic compound additive of the present disclosure can include methoxybenzene, 1-ethynyl-4-methoxybenzene, tert-butylbenzene, fluorobenzene, 1,2-difluorobenzene, 1,1'-oxydibenzene, 1,4-diphenylbenzene, 2-fluoro-4-(2-methyl-2-propanyl)aniline, N-[3-(trimethoxysilyl)propyl]aniline, or a combination thereof.

The phosphorus compound additive of the present disclosure can be tris(trimethylsilyl) phosphite (TMSPi), tris(2,2,2-trifluoroethyl) phosphite, triphenyl phosphite, 1,3,5,2,4,6-triazatriphosphorine (2-ethoxy-2,4,4,6,6-pentafluoro-2,2,4,4,6,6-hexahydro-), or a combination thereof.

The boron compound additive of the present disclosure can be trimethyl borate, tris(trimethylsilyl) borate, 2,4,6-trimethyl-1,3,5,2,4,6-trioxatriborinane, or a combination thereof.

The inorganic oxide additive of the present disclosure can be LiLaZrO, LiLaZrTaO, LiLaTiO, LiPO, LiPOF, LiTiPO, LiAlGeP, LiAlTiPO, LiGePSO, LiSnPSO, PbZrTiO, PbLaZrTiO, BaTiO, or other composite materials. The aforementioned inorganic oxide additive can have various oxidation states, or can be $Al_2O_3$, $TiO_2$, $SiO_2$, $SnO_2$, NiO, ZnO, CaO, MgO, $ZrO_2$, $CeO_2$, $Y_2O_3$, etc., so that it is favorable for reducing the degree of crystallinity of the electrolyte with high molecular weight so as to increase the electrical conductivity of ions and the physical and mechanical properties of the electrolyte. Thus, the cycle life of the battery can be enhanced.

The separator of the present disclosure can be a thin film with porous structure, and the separator can include a single layer or multiple layers of fibers of polyolefins, polyamides, polyesters, such as polyethylene (PE), polypropylene (PP), polyethylene terephthalate (PET), acrylonitrile butadiene styrene copolymer (ABS), epoxy resin, etc. The surface thereof can include an inorganic ceramic composite film of at least one of $Mg(OH)_2$, MgO, $BaSO_4$, $SnO_2$, NiO, CaO, $Al_2O_3$, ZnO, $SiO_2$, $TiO_2$, or a combination thereof. Further, the aforementioned inorganic ceramic composite film can be presented by many different oxidation states.

The current collector of the present disclosure can be a substrate made of a metal foil or a conductive polymer, wherein the metal foil can be selected from aluminum, copper, titanium, nickel, tantalum, stainless steel, or alloys composed of the aforementioned metals.

The cycles of the battery of the present disclosure are defined as that the battery is in a condition of a commercial product, and the first test under the aforementioned condition is taken as the first cycle of the present disclosure. One cycle is defined as completing one discharging test and one charging test, and the number of the cycles is accordingly accumulated.

The electrical capacity of the battery of the present disclosure can be obtained by measuring the charging capacity of the battery and the discharging capacity of the battery. The calculating method for the electrical capacity can be defined as the volumetric capacity ($mAh/cm^3$) and the gravimetric capacity (mAh/g). The volumetric capacity means the electrical capacity provided by the electrode piece per cubic centimeter in a battery, and the volume of the current collector should be deducted as calculating the volumetric capacity. The gravimetric capacity means the electrical capacity provided by the electrode piece per gram in a battery, and the weight of the current collector should be deducted as calculating the gravimetric capacity. The electrode piece can be the cathode piece or the anode piece.

The C-rate (C) of the present disclosure can refer to the current of the battery being fully discharged for one hour, and C can be the unit of the charging and discharging current of the battery.

The measuring voltage range of the battery of the present disclosure can be selected based on the redox potential of the anode material and the cathode material to obtain a relatively proper voltage range. The voltage range can be 0 V to 5.0 V; perfectly, the voltage range can be 0 V to 3.0 V; and more perfectly, the voltage range can be 1.0 V to 4.5 V.

The discharge volumetric capacity of the present disclosure can be represent as CiVj, and the discharge gravimetric capacity can be represent as CiGj, wherein i represents the current for charging and discharging in the unit of C, and j represents the number of cycle of charging and discharging of the battery.

In the Coulombic efficiency of the present disclosure, a total number of Coulombic efficiency satisfying a certain percentage range can be represented as nxCyEz, wherein x represents the lower limit of the certain percentage range, y represents the current for charging and discharging in the unit of C, and z represents the stopped number of cycle of charging and discharging of the battery.

In the Coulombic efficiency of the present disclosure, an average of Coulombic efficiencies can be represented as aCyEz, wherein y represents the current for charging and discharging in the unit of C, and z represents the stopped number of cycle of charging and discharging of the battery.

The battery assembly of the present disclosure can include a battery case, a spring, a spacer, a lid, a tab, or a cap.

The bipolar battery of the present disclosure can include an electrode piece of the bipolar battery and an electrolyte. One side of the electrode piece of the bipolar battery is the cathode including a cathode material, and the other side of the electrode piece of the bipolar battery is the anode including an anode material. The two electrode pieces of the bipolar battery are connected through the electrolyte (the electrolyte contacts the cathode of one bipolar battery electrode piece and the anode of another bipolar battery electrode piece) to form the bipolar battery unit, and a plurality of the bipolar battery units are connected in series to form the bipolar battery.

The battery of the present disclosure can be a primary cell or a secondary cell. The electrochemical carrier of the primary cell or the secondary cell can be at least one of a button type carrier, a winding type carrier or a stacking type carrier. It can be applied to the portable electronic products, such as digital cameras, mobile phones, notebook computers, console handles and other devices which need to be light and thin, or applied to the power storage industries with large-scale, such as light electric vehicles and electric vehicles.

The differential capacity analysis (DCA) of the charging and discharging voltage with a constant current and the electric quantity of the present disclosure can be used to determine the optimal voltage range during the oxidation-reduction of the object. The constant current is set as 1 C for charging or discharging, and the working voltage range for charging and discharging is set as 0.00 V to 5.00 V (vs Li$^+$/Li). The first charging and discharging voltage-electric quantity curve data of the object is taken to perform a linear differential to the voltage, and a graph is drawn with the x-axis as the voltage (V vs Li$^+$/Li) and the y-axis of dQ/dV (mAh/V) so as to obtain a constant current charging and discharging voltage-electric quantity curve differential diagram. The optimal voltage and peak value of the oxidation peak of the object can be observed by the linear differential of the charging curve, and the optimal voltage and peak value of the reduction peak of the object can be observed by the linear differential of the discharging curve. The determining standard of the oxidation peak is described as follows. The charging voltage-electric quantity curve data is taken to perform a cubic differential to the voltage so as to obtain a cubic differential data of the charging curve. The voltage corresponding to the peak value smaller than -5 (mAh/V$^3$) set in the cubic differential data of the charging curve is regarded as the oxidation peak voltage. The voltage corresponding to the smallest peak value is set as the first oxidation peak voltage, and the peak value corresponding to the first oxidation peak voltage in the linear differential data of the charging curve is set as the peak value of the first oxidation peak. The voltage corresponding to the second smallest peak value is set as the second oxidation peak voltage, and the peak value corresponding to the second oxidation peak voltage in the linear differential data of the charging curve is set as the peak value of the second oxidation peak. The determining standard of the reduction peak is described as follows. The discharging voltage-electric quantity curve data is taken to perform a cubic differential to the voltage so as to obtain a cubic differential data of the discharging curve. The voltage corresponding to the peak value larger than 5 (mAh/V$^3$) set in the cubic differential data of the discharging curve is regarded as the reduction peak voltage. The voltage corresponding to the largest peak value is set as the first reduction peak voltage, and the peak value corresponding to the first reduction peak voltage in the linear differential data of the discharging curve is set as the peak value of the first reduction peak. The voltage corresponding to the second largest is set as the second reduction peak voltage, and the peak value corresponding to the second reduction peak voltage in the linear differential data of the discharging curve is set as the peak value of the second reduction peak.

The electrochemical stability of the present disclosure is measured by the linear sweep voltammetry (LSV). The scanning speed is 0.1 V/s and it is repeatedly tested under the condition of the Li/Li$^+$ relative voltage between -5 V to 5 V, and the results of the corresponding changes in the relationship between current and potential can be obtained.

The cumulative particle size of the present disclosure represents the distribution of particle sizes of the particles with various sizes in the object. The cumulative particle size distribution can be obtained according to the distribution proportion of each particle size and the cumulative percentage based on the volume. For example, the particle size of the distribution proportion of the cumulative particle size reaching 50% is defined as D50, and it can be used to illustrate that 50% of the particles in the object have a particle size smaller than D50. The definitions of D10 and D90 can be known accordingly. Unless otherwise specified, D50 is used as the standard for determining the particle size, and the cumulative particle size of the object can be measured by the laser analyzer or the dynamic light scattering device.

The observed particle size of the present disclosure is obtained by observing the top view of the composition with an electron microscope. The direction perpendicular to the top view plane is set so as to divide into the shallow area and the deep area, the particles with a granular or spherical shape in the shallow area are selected as a priority, and the maximum diameter of a single particle is measured. If the shape of the object is irregular, the lengths of the longest side and the shortest side are measured and then averaged, and at least three objects are selected within the measurement range for measurement.

The laser analyzer of the present disclosure can use the Malvern mastersizer 3000+ to measure the particle size lager than the range of the wavelength of the incident light, wherein the diffraction angle of the large particles is small, while the diffraction angle of the small particles is large. By arranging the plural detectors at different angles to collect the light and analyze the scattering phenomenon of micron-sized particles, the particle size can be analyzed.

In the particle size of the present disclosure, the particle size and the particle size distribution thereof can be obtained by measuring the amplitude corresponding to the time of the scattering light from the particles undergoing Brownian motion by dynamic light scattering. The particle size can be calculated by the Stokes-Einstein equation, which is shown as follows:

$$D = kT/(3\pi\eta Df);$$

wherein D is the particle size (the unit is m), k is Boltzmann constant (the unit is J/K), T is the absolute temperature (the unit is K), $\eta$ is the viscosity of the solvent (the unit is $kg \times m^{-1} \times s^{-1}$), and Df is the diffusion coefficient (the unit is $m^2 \times s^{-1}$).

In the weight ratio of the anode of the present disclosure, the anode weight calculated here does not include the weight of the current collector.

The material thickness of the anode of the present disclosure can be obtained by measuring the thickness of the anode piece and then deducting the thickness of the current collector.

In the density of the anode material of the present disclosure, a circular anode piece with a diameter of 14 mm is cut, and the weight of the anode piece is measured and then the weight of the current collector is deducted. Then, the thickness of the anode piece and the area of the cutting circle are measured so as to obtain the volume, and the weight is divided by the volume to obtain the density of the anode material.

The electric resistance of the anode material of the present disclosure can be measured by the four-point probes resistance meter. The distances between any two of the probes adjacent thereto are the same. During measuring, the probe will contact the surface of the sample, and the closest distance between any probe on the surface and the boundary of the sample must be larger than 7.5 cm.

The roughness of the present disclosure is an arithmetical mean height of the surface of the surface characteristic parameter Sa ($\mu$m) according to ISO 251781. The region for measuring the roughness is set for an area being at least larger than 10000 $\mu$m$^2$. The average height of the surface is the arithmetical mean of the height of each point Z(x,y) in the region. Sa is the average value of the absolute values of the difference between each point Z(x,y) in the region and the average height of the surface according to the following equation:

$$Sa = \frac{1}{A} \iint\limits_{A} |Z(x,y) - h| dxdy \; ;$$

wherein A is the area of the region ($\mu$m$^2$), and h is the average height of the surface ($\mu$m).

The conductivity of the present disclosure is measured by the electrochemical impedance spectroscopy (EIS) method, wherein the alternating current with 1 Hz to 1000 kHz and the amplitude of 50 mV is applied to the polymer or the electrolyte so as to measure the resistor value. Then, the conductivity is calculated by the following equation:

$$Ci = (1/R) \times (L/A);$$

wherein Ci ($S \times cm^{-1}$) is the conductivity, R ($\Omega$) is the resistance value, L (cm) is the distance between two electrodes, and A (cm$^2$) is the sectional area of the sample to be tested and the electrodes, wherein (L/A) can be defined as the conductivity parameter (cm$^{-1}$).

All the arrangements of the component particle and the dispersed particle the present disclosure can be made into the compositions according to the related materials or the related ratios, the anodes can be made according to the related materials or the related ratios, and the battery can be made according to the related materials or the related ratios and then performed by the charging and discharging test. The present disclosure only shows some of the relevant arrangements, and that which is without the data or cannot be calculated are marked with "-" in the tables.

According to the above descriptions, the specific embodiments are given below so as to describe the present disclosure in detail.

<Comparative example 1>

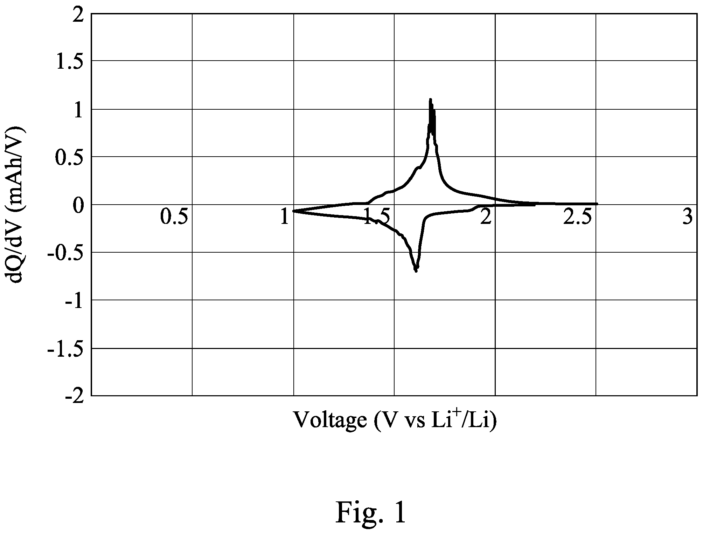

Reference is made to Fig. 1, which is a diagram of charging and discharging voltage-electric quantity differential curve with a constant current of a battery according to Comparative example 1. Comparative example 1 provides a battery, and the anode thereof includes an anode material. The anode material includes a composition, the composition only includes a component particle, and the component particle includes a niobium-titanium complex oxide. The detail data of the battery of Comparative example 1 is shown in Table 1.

| Table 1 | | | | | |
|---|---|---|---|---|---|
| | | | | | Comparative example 1 |
| Composition | Component particle | Material | | | Niobium-titanium complex oxide |
| | | Weight ratio | | pWtn | 1.00 |
| | | Cumulative particle size (µm) | | tnD50 | 9.95 |
| | | Observed particle size (µm) | SDtn | SDtn1 | 7.54 |
| | | | | SDtn2 | 8.10 |
| | | | | SDtn3 | 5.91 |
| | | | | SDtn4 | - |
| | Dispersed particle | Material | | | - |
| | | Weight ratio | | pWen | - |
| | | Cumulative particle size (µm) | | enD50 | - |
| | | Observed particle size (µm) | SDen | SDen1 | - |
| | | | | SDen2 | - |
| | | | | SDen3 | - |
| | | | | SDen4 | - |
| | pWtn/pWen | | | | - |
| | Log(tnD50/enD50) | | | | - |
| Anode | Anode material | Composition | Weight ratio | pWo | - |
| | | Conductive agent | Weight ratio | pWc | - |
| | | Adhesive | Weight ratio | pWa | - |
| | | pWo/pWc | | | - |
| | | Density (g/cm$^3$) | | DSan | - |

| Thickness (μm) | | | THan | - |
|---|---|---|---|---|
| Electric resistance (mΩ) | | | Ran | - |
| Oxidation peak | First oxidation peak | Voltage (V) | Epa1 | 1.68 |
| | | Peak value (mAh/V) | Ipa1 | 1.04 |
| | Second oxidation peak | Voltage (V) | Epa2 | 1.70 |
| | | Peak value (mAh/V) | Ipa2 | 0.77 |
| Reduction peak | First reduction peak | Voltage (V) | Epc1 | 1.605 |
| | | Peak value (mAh/V) | Ipc1 | -0.70 |
| | Second reduction peak | Voltage (V) | Epc2 | 1.615 |
| | | Peak value (mAh/V) | Ipc2 | -0.65 |
| Epa1-Epc1 | | | | 0.08 |
| Ipa1/Ipa2 | | | | 1.35 |
| Ipc1/Ipc2 | | | | 1.07 |
| \|Ipa1/Ipc1\| | | | | 1.50 |
| Battery | C1V100/C1V10 | | | 1.39 |
| | C1V500/C1V10 | | | - |
| | C4V100/C4V10 | | | - |
| | C6V100/C6V10 | | | - |
| | C4V100/C1V100 | | | - |
| | C6V100/C1V100 | | | - |

<Comparative example 2>

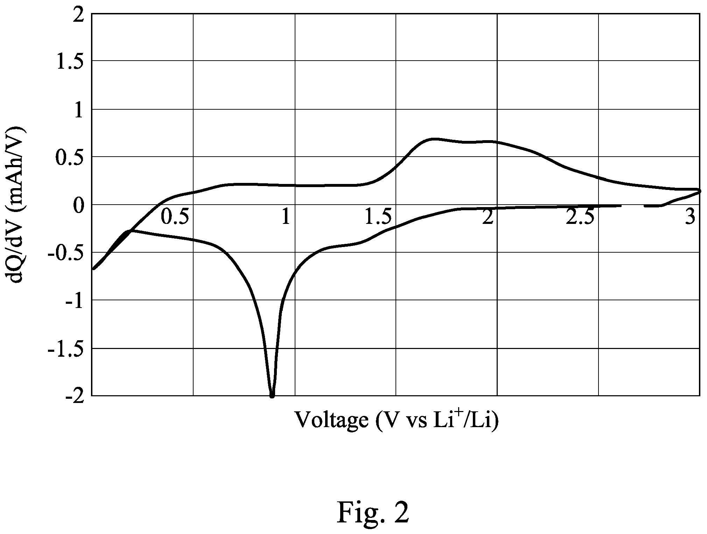

Reference is made to Fig. 2, which is a diagram of charging and discharging voltage-electric quantity differential curve with a constant current of a battery according to Comparative example 2. Comparative example 2 provides a battery, and the anode thereof includes an anode material. The anode material includes a composition, the composition only includes a dispersed particle, and the dispersed particle includes a silicon-tin-iron complex oxide. The detail data of the battery of Comparative example 2 is shown in Table 2.

| Table 2 | | | | |
|---|---|---|---|---|
| | | | | Comparative example 2 |
| Composition | Component particle | Material | | - |
| | | Weight ratio | pWtn | - |
| | | Cumulative particle size (µm) | tnD50 | - |
| | | Observed particle size (µm) / SDtn | SDtn1 | - |
| | | | SDtn2 | - |
| | | | SDtn3 | - |
| | | | SDtn4 | - |
| | Dispersed particle | Material | | Silicon-tin-iron complex oxide |
| | | Weight ratio | pWen | 1.00 |
| | | Cumulative particle size (µm) | enD50 | 0.60 |
| | | Observed particle size (µm) / SDen | SDen1 | 0.38 |
| | | | SDen2 | 0.47 |
| | | | SDen3 | 0.50 |
| | | | SDen4 | - |
| | pWtn/pWen | | | - |
| | Log(tnD50/enD50) | | | - |
| Anode | Anode material | Composition Weight ratio | pWo | - |
| | | Conductive agent Weight ratio | pWc | - |
| | | Adhesive Weight ratio | pWa | - |
| | | pWo/pWc | | - |
| | | Density (g/cm³) | DSan | - |
| | | Thickness (µm) | THan | - |
| | | Electric resistance (mΩ) | Ran | - |
| | | Oxidation peak / First oxidation peak | Voltage (V) / Epa1 | 1.71 |
| | | | Peak value (mAh/V) / Ipa1 | 0.69 |
| | | Oxidation peak / Second oxidation peak | Voltage (V) / Epa2 | 2.00 |
| | | | Peak value (mAh/V) / Ipa2 | 0.65 |
| | | Reduction peak / First reduction peak | Voltage (V) / Epc1 | 0.89 |
| | | | Peak value (mAh/V) / Ipc1 | -2.03 |

| | | | Second reduction peak | Voltage (V) | Epc2 | 1.30 |
|---|---|---|---|---|---|---|
| | | | | peak value (mAh/V) | Ipc2 | -0.40 |
| | | | Epa1-Epc1 | | | 0.82 |
| | | | Ipa1/Ipa2 | | | 1.05 |
| | | | Ipc1/Ipc2 | | | 5.03 |
| | | | \|Ipa1/Ipc1\| | | | 0.34 |
| Battery | | | C1V100/C1V10 | | | 1.14 |
| | | | C1V500/C1V10 | | | 0.57 |
| | | | C4V100/C4V10 | | | 0.96 |
| | | | C6V100/C6V10 | | | 0.92 |
| | | | C4V100/C1V100 | | | 0.89 |
| | | | C6V100/C1V100 | | | 0.74 |

<Comparative example 3>

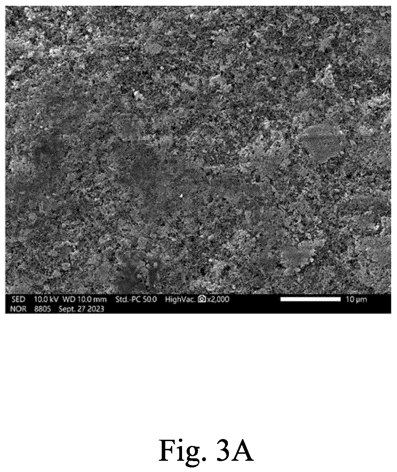

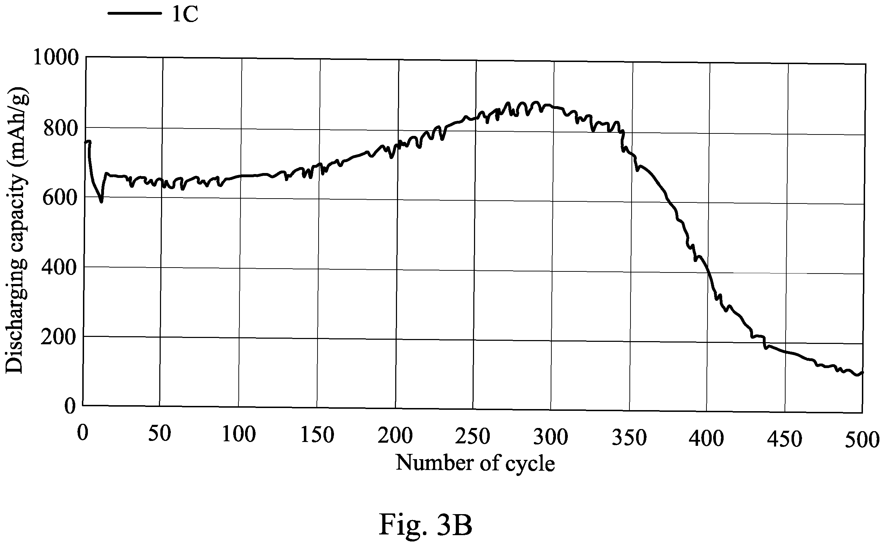

Reference is made to Fig. 3A and Fig. 3B, wherein Fig. 3A is a scanning electron microscopy image of an anode of a battery according to Comparative example 3, and Fig. 3B is a discharge cycle diagram with a current of 1 C of the battery according to Comparative example 3. Comparative example 3 provides a battery, and the anode thereof includes an anode material. The anode material includes a composition, and the composition includes a component particle and a dispersed particle, wherein the component particle includes a niobium-titanium complex oxide, and the dispersed particle includes a silicon-tin-iron complex oxide. The detail data of the battery of Comparative example 3 is shown in Table 3.

| Table 3 | | | | | | |
|---|---|---|---|---|---|---|
| | | | | | | Comparative example 3 |
| Composition | Component particle | Material | | | | Niobium titanium complex oxide |
| | | Weight ratio | | | pWtn | 0.30 |
| | | Cumulative particle size (μm) | | | tnD50 | - |
| | | Observed particle size (μm) | | SDtn | SDtn1 | - |
| | | | | | SDtn2 | - |
| | | | | | SDtn3 | - |

| | | | | | SDtn4 | - |
|---|---|---|---|---|---|---|
| | | | Material | | | Silicon-tin-iron complex oxide |
| | Dispersed particle | Weight ratio | | pWen | | 0.70 |
| | | Cumulative particle size (µm) | | enD50 | | - |
| | | Observed particle size (µm) | SDen | SDen1 | | - |
| | | | | SDen2 | | - |
| | | | | SDen3 | | - |
| | | | | SDen4 | | - |
| | pWtn/pWen | | | | | 0.43 |
| | Log(tnD50/enD50) | | | | | - |
| Anode | Anode material | Composition | Weight ratio | pWo | | 0.65 |
| | | Conductive agent | Weight ratio | pWc | | 0.20 |
| | | Adhesive | Weight ratio | pWa | | 0.15 |
| | | pWo/pWc | | | | 3.25 |
| | | Density (g/cm$^3$) | | DSan | | 1.15 |
| | | Thickness (µm) | | THan | | 14.0 |
| | | Electric resistance (mΩ) | | Ran | | 1.35 |
| | | Oxidation peak | First oxidation peak | Voltage (V) | Epa1 | - |
| | | | | Peak value (mAh/V) | Ipa1 | - |
| | | | Second oxidation peak | Voltage (V) | Epa2 | - |
| | | | | Peak value (mAh/V) | Ipa2 | - |
| | | Reduction peak | First reduction peak | Voltage (V) | Epc1 | - |
| | | | | Peak value (mAh/V) | Ipc1 | - |
| | | | Second reduction peak | Voltage (V) | Epc2 | - |
| | | | | Peak value (mAh/V) | Ipc2 | - |
| | | Epa1-Epc1 | | | | - |
| | | Ipa1/Ipa2 | | | | - |
| | | Ipc1/Ipc2 | | | | - |
| | | |Ipa1/Ipc1| | | | | - |
| Battery | C1V100/C1V10 | | | | | 1.12 |
| | C1V500/C1V10 | | | | | 0.19 |
| | C4V100/C4V10 | | | | | - |
| | C6V100/C6V10 | | | | | - |
| | C4V100/C1V100 | | | | | - |

| | C6V100/C1V100 | - |
|---|---|---|

<Example 1>

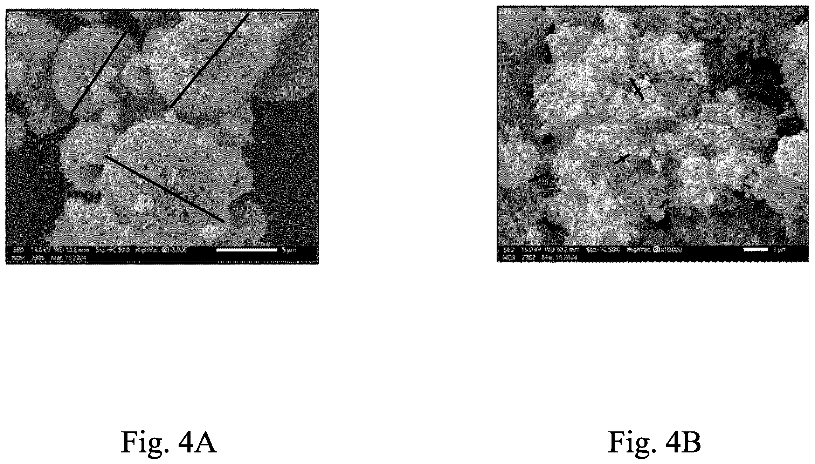

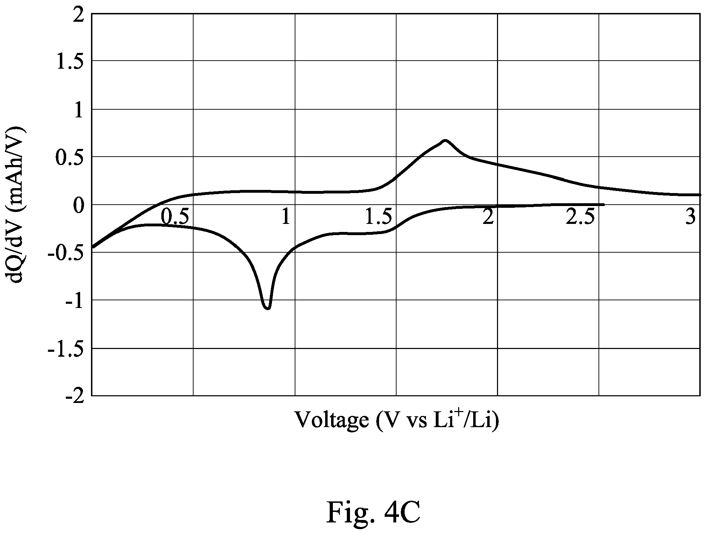

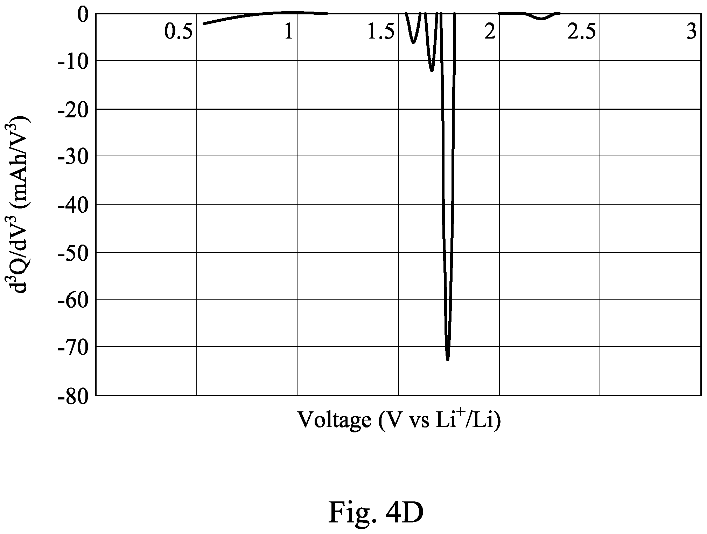

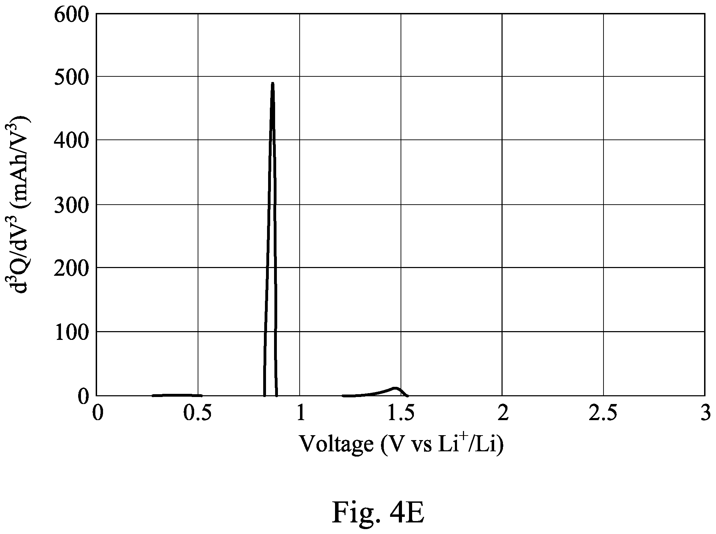

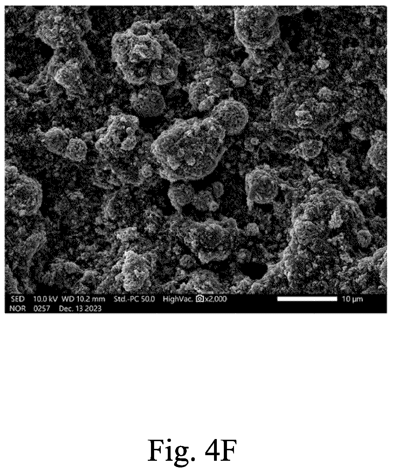

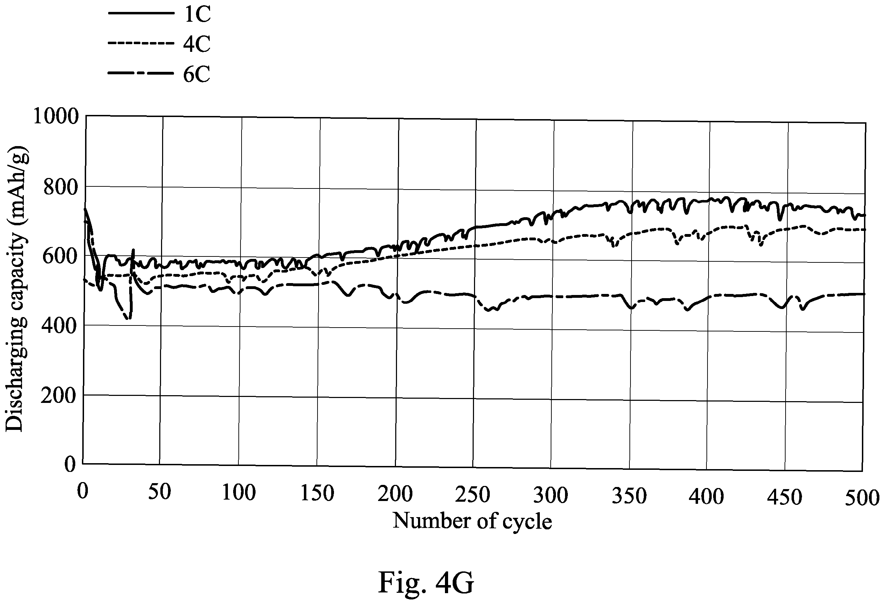

Reference is made to Fig. 4A, Fig. 4B, Fig. 4C, Fig. 4D, Fig. 4E, Fig. 4F and Fig. 4G, wherein Fig. 4A is a scanning electron microscopy image of a surface of a component particle of a battery according to Example 1, Fig. 4B is a scanning electron microscopy image of a surface of a dispersed particle of the battery according to Example 1, Fig. 4C is a diagram of charging and discharging voltage-electric quantity differential curve with a constant current of a battery according to Example 1, Fig. 4D is a diagram of cubic differential curve of the battery during charging according to Example 1, Fig. 4E is a diagram of cubic differential curve of the battery during discharging according to Example 1, Fig. 4F is a scanning electron microscopy image of an anode of the battery according to Example 1, and Fig. 4G is a discharge cycle diagram with currents of 1 C, 4 C and 6 C of the battery according to Example 1.

Example 1 provides a battery, and the anode thereof includes an anode material. The anode material includes a composition, and the composition includes a component particle and a dispersed particle, wherein the component particle includes a niobium-titanium complex oxide, and the dispersed particle includes a silicon-tin-iron complex oxide. The detail data of the battery of Example 1 is shown in Table 4.

| Table 4 | | | | | |
|---|---|---|---|---|---|
| | | | | | Example 1 |
| Composition | Component particle | Material | | | Niobium-titanium complex oxide |
| | | Weight ratio | | pWtn | 0.30 |
| | | Cumulative particle size (μm) | | tnD50 | - |
| | | Observed particle size (μm) | SDtn | SDtn1 | 7.91 |
| | | | | SDtn2 | 10.93 |

| | | | | | SDtn3 | 9.81 |
|---|---|---|---|---|---|---|
| | | | | | SDtn4 | - |
| | Dispersed particle | Material | | | | Silicon-tin-iron complex oxide |
| | | Weight ratio | | | pWen | 0.70 |
| | | Cumulative particle size (μm) | | | enD50 | - |
| | | Observed particle size (μm) | | SDen | SDen1 | 0.56 |
| | | | | | SDen2 | 0.39 |
| | | | | | SDen3 | 0.35 |
| | | | | | SDen4 | - |
| | pWtn/pWen | | | | | 0.43 |
| | Log(tnD50/enD50) | | | | | - |
| Anode | Anode material | Composition | Weight ratio | | pWo | 0.65 |
| | | Conductive agent | Weight ratio | | pWc | 0.20 |
| | | Adhesive | Weight ratio | | pWa | 0.15 |
| | | pWo/pWc | | | | 3.25 |
| | | Density (g/cm$^3$) | | | DSan | 0.83 |
| | | Thickness (μm) | | | THan | 15.0 |
| | | Electric resistance (mΩ) | | | Ran | 1.25 |
| | | Oxidation peak | First oxidation peak | Voltage (V) | Epa1 | 1.75 |
| | | | | peak value (mAh/V) | Ipa1 | 0.67 |
| | | | Second oxidation peak | Voltage (V) | Epa2 | 1.67 |
| | | | | peak value (mAh/V) | Ipa2 | 0.58 |
| | | Reduction peak | First reduction peak | Voltage (V) | Epc1 | 0.87 |
| | | | | peak value (mAh/V) | Ipc1 | -1.07 |
| | | | Second reduction peak | Voltage (V) | Epc2 | 1.48 |
| | | | | peak value (mAh/V) | Ipc2 | -0.26 |
| | | Epa1-Epc1 | | | | 0.87 |
| | | Ipa1/Ipa2 | | | | 1.17 |
| | | Ipc1/Ipc2 | | | | 4.11 |
| | | \|Ipa1/Ipc1\| | | | | 0.63 |
| Battery | | C1V100/C1V10 | | | | 1.14 |
| | | C1V500/C1V10 | | | | 1.46 |
| | | C4V100/C4V10 | | | | 1.01 |
| | | C6V100/C6V10 | | | | 0.92 |

| | C4V100/C1V100 | 0.95 |
|---|---|---|
| | C6V100/C1V100 | 0.88 |

<Example 2>

Example 2 provides a battery, and the anode thereof includes an anode material. The anode material includes a composition, and the composition includes a component particle and a dispersed particle, wherein the component particle includes a niobium-titanium complex oxide, and the dispersed particle includes a silicon-tin-iron complex oxide. The detail data of the battery of Example 2 is shown in Table 5.

| Table 5 | | | | | |
|---|---|---|---|---|---|
| | | | | | Example 2 |
| Composition | Component particle | Material | | | Niobium-titanium complex oxide |
| | | Weight ratio | | pWtn | 0.30 |
| | | Cumulative particle size (µm) | | tnD50 | - |
| | | Observed particle size (µm) | SDtn | SDtn1 | 4.16 |
| | | | | SDtn2 | 12.12 |
| | | | | SDtn3 | 7.62 |
| | | | | SDtn4 | 11.00 |
| | Dispersed particle | Material | | | Silicon-tin-iron complex oxide |
| | | Weight ratio | | pWen | 0.70 |
| | | Cumulative particle size (µm) | | enD50 | - |
| | | Observed particle size (µm) | SDen | SDen1 | 0.44 |
| | | | | SDen2 | 0.58 |
| | | | | SDen3 | 0.41 |
| | | | | SDen4 | - |
| | pWtn/pWen | | | | 0.43 |
| | Log(tnD50/enD50) | | | | - |
| Anode | Anode material | Composition | Weight ratio | pWo | 0.65 |
| | | Conductive agent | Weight ratio | pWc | 0.20 |
| | | Adhesive | Weight ratio | pWa | 0.15 |
| | | pWo/pWc | | | 3.25 |
| | | Density (g/cm$^3$) | | DSan | 1.08 |
| | | Thickness (µm) | | THan | 15.0 |
| | | Electric resistance (mΩ) | | Ran | 1.55 |
| | | Oxidation peak | First oxidation | Voltage (V) | Epa1 | - |

| | | | | | |
|---|---|---|---|---|---|
| | | | peak | Peak value (mAh/V) | Ipa1 | - |

| | | | |
|---|---|---|---|
| | peak | Peak value (mAh/V) | Ipa1 | - |
| | Second oxidation peak | Voltage (V) | Epa2 | - |
| | | Peak value (mAh/V) | Ipa2 | - |
| Reduction peak | First reduction peak | Voltage (V) | Epc1 | - |
| | | Peak value (mAh/V) | Ipc1 | - |
| | Second reduction peak | Voltage (V) | Epc2 | - |
| | | Peak value (mAh/V) | Ipc2 | - |
| Epa1-Epc1 | | | | - |
| Ipa1/Ipa2 | | | | - |
| Ipc1/Ipc2 | | | | - |
| \|Ipa1/Ipc1\| | | | | - |
| Battery | C1V100/C1V10 | | | 1.15 |
| | C1V500/C1V10 | | | 0.64 |
| | C4V100/C4V10 | | | - |
| | C6V100/C6V10 | | | - |
| | C4V100/C1V100 | | | - |
| | C6V100/C1V100 | | | - |

<Example 3>

Example 3 provides a battery, and the anode thereof includes an anode material. The anode material includes a composition, and the composition includes a component particle and a dispersed particle, wherein the component particle includes a niobium-titanium complex oxide, and the dispersed particle includes a silicon-tin-iron complex oxide. The detail data of the battery of Example 3 is shown in Table 6.

| Table 6 | |
|---|---|
| | Example 3 |

| | | | | | |
|---|---|---|---|---|---|
| Composition | Component particle | Material | | | Niobium-titanium complex oxide |
| | | Weight ratio | | pWtn | 0.30 |
| | | Cumulative particle size (μm) | | tnD50 | - |
| | | Observed particle size (μm) | SDtn | SDtn1 | 11.26 |
| | | | | SDtn2 | 6.77 |
| | | | | SDtn3 | 10.64 |
| | | | | SDtn4 | - |
| | Dispersed particle | Material | | | Silicon-tin-iron complex oxide |
| | | Weight ratio | | pWen | 0.70 |
| | | Cumulative particle size (μm) | | enD50 | - |
| | | Observed particle size (μm) | SDen | SDen1 | 0.41 |
| | | | | SDen2 | 0.31 |
| | | | | SDen3 | 0.21 |
| | | | | SDen4 | - |
| | pWtn/pWen | | | | 0.43 |
| | Log(tnD50/enD50) | | | | - |
| Anode | Anode material | Composition | Weight ratio | pWo | 0.65 |
| | | Conductive agent | Weight ratio | pWc | 0.20 |
| | | Adhesive | Weight ratio | pWa | 0.15 |
| | | pWo/pWc | | | 3.25 |
| | | Density (g/cm$^3$) | | DSan | 0.71 |
| | | Thickness (μm) | | THan | 13.0 |
| | | Electric resistance (mΩ) | | Ran | 1.78 |
| | | Oxidation peak | First oxidation peak | Voltage (V) | Epa1 | - |
| | | | | Peak value (mAh/V) | Ipa1 | - |
| | | | Second oxidation peak | Voltage (V) | Epa2 | - |
| | | | | Peak value (mAh/V) | Ipa2 | - |
| | | Reduction peak | First reduction peak | Voltage (V) | Epc1 | - |
| | | | | Peak value (mAh/V) | Ipc1 | - |
| | | | Second reduction peak | Voltage (V) | Epc2 | - |
| | | | | Peak value (mAh/V) | Ipc2 | - |
| | | Epa1-Epc1 | | | - |
| | | Ipa1/Ipa2 | | | - |

| | |
|---|---|
| Ipc1/Ipc2 | - |
| \|Ipa1/Ipc1\| | - |
| C1V100/C1V10 | 1.16 |
| C1V500/C1V10 | 1.75 |
| C4V100/C4V10 | - |
| C6V100/C6V10 | - |
| C4V100/C1V100 | - |
| C6V100/C1V100 | - |

(Battery)

<Example 4>

Example 4 provides a battery, and the anode thereof includes an anode material. The anode material includes a composition, and the composition includes a component particle and a dispersed particle, wherein the component particle includes a niobium-titanium complex oxide, and the dispersed particle includes a silicon-tin-iron complex oxide. The detail data of the battery of Example 4 is shown in Table 7.

| Table 7 | | | | | |
|---|---|---|---|---|---|
| | | | | | Example 4 |
| Composition | Component particle | Material | | | Niobium titanium complex oxide |
| | | Weight ratio | | pWtn | 0.30 |
| | | Cumulative particle size (µm) | | tnD50 | - |
| | | Observed particle size (µm) | SDtn | SDtn1 | 10.70 |
| | | | | SDtn2 | 7.73 |
| | | | | SDtn3 | 7.26 |
| | | | | SDtn4 | - |
| | Dispersed particle | Material | | | Silicon-tin-iron complex oxide |
| | | Weight ratio | | pWen | 0.70 |
| | | Cumulative particle size (µm) | | enD50 | - |
| | | Observed particle size (µm) | SDen | SDen1 | 0.49 |
| | | | | SDen2 | 0.36 |
| | | | | SDen3 | 0.83 |
| | | | | SDen4 | - |
| | pWtn/pWen | | | | 0.43 |
| | Log(tnD50/enD50) | | | | - |
| Anode | Anode material | Composition | Weight ratio | pWo | 0.65 |
| | | Conductive agent | Weight ratio | pWc | 0.20 |
| | | Adhesive | Weight ratio | pWa | 0.15 |
| | | pWo/pWc | | | 3.25 |
| | | Density (g/cm$^3$) | | DSan | 0.79 |

| | | | | | |
|---|---|---|---|---|---|
| Thickness (µm) | | | | THan | 13.0 |
| Electric resistance (mΩ) | | | | Ran | 37.14 |
| Oxidation peak | First oxidation peak | Voltage (V) | Epa1 | - |
| | | Peak value (mAh/V) | Ipa1 | - |
| | Second oxidation peak | Voltage (V) | Epa2 | - |
| | | Peak value (mAh/V) | Ipa2 | - |
| Reduction peak | First reduction peak | Voltage (V) | Epc1 | - |
| | | Peak value (mAh/V) | Ipc1 | - |
| | Second reduction peak | Voltage (V) | Epc2 | - |
| | | Peak value (mAh/V) | Ipc2 | - |
| Epa1-Epc1 | | | | | - |
| Ipa1/Ipa2 | | | | | - |
| Ipc1/Ipc2 | | | | | - |
| \|Ipa1/Ipc1\| | | | | | - |
| Battery | C1V100/C1V10 | | | | 1.13 |
| | C1V500/C1V10 | | | | 1.43 |
| | C4V100/C4V10 | | | | - |
| | C6V100/C6V10 | | | | - |
| | C4V100/C1V100 | | | | - |
| | C6V100/C1V100 | | | | - |

<Example 5>

Example 5 provides a battery, and the anode thereof includes an anode material. The anode material includes a composition, and the composition includes a component particle and a dispersed particle, wherein the component particle includes a niobium-titanium complex oxide, and the dispersed particle includes a silicon-tin-iron complex oxide. The detail data of the battery of Example 5 is shown in Table 8.

| Table 8 | | | | |
|---|---|---|---|---|
| | | | | Example 5 |
| Composition | Component particle | Material | | | Niobium-titanium complex oxide |
| | | Weight ratio | | pWtn | 0.30 |
| | | Cumulative particle size (μm) | | tnD50 | - |
| | | Observed particle size (μm) | SDtn | SDtn1 | 3.60 |
| | | | | SDtn2 | 8.11 |
| | | | | SDtn3 | 7.70 |
| | | | | SDtn4 | 4.64 |
| | Dispersed particle | Material | | | Silicon-tin-iron complex oxide |
| | | Weight ratio | | pWen | 0.70 |
| | | Cumulative particle size (μm) | | enD50 | - |
| | | Observed particle size (μm) | SDen | SDen1 | 0.46 |
| | | | | SDen2 | 0.56 |
| | | | | SDen3 | 0.58 |
| | | | | SDen4 | - |
| | | pWtn/pWen | | | 0.43 |
| | | Log(tnD50/enD50) | | | - |
| Anode | Anode material | Composition | Weight ratio | pWo | 0.65 |
| | | Conductive agent | Weight ratio | pWc | 0.20 |
| | | Adhesive | Weight ratio | pWa | 0.15 |
| | | pWo/pWc | | | 3.25 |
| | | Density (g/cm³) | | DSan | 0.79 |
| | | Thickness (μm) | | THan | 13.0 |
| | | Electric resistance (mΩ) | | Ran | 1.32 |
| | | Oxidation peak | First oxidation peak | Voltage (V) | Epa1 | - |
| | | | | Peak value (mAh/V) | Ipa1 | - |
| | | | Second oxidation peak | Voltage (V) | Epa2 | - |
| | | | | Peak value (mAh/V) | Ipa2 | - |
| | | Reduction peak | First reduction peak | Voltage (V) | Epc1 | - |
| | | | | Peak value (mAh/V) | Ipc1 | - |
| | | | Second reduction peak | Voltage (V) | Epc2 | - |
| | | | | Peak value (mAh/V) | Ipc2 | - |

| Epa1-Epc1 | - |
|---|---|
| Ipa1/Ipa2 | - |
| Ipc1/Ipc2 | - |
| \|Ipa1/Ipc1\| | - |
| C1V100/C1V10 | 1.18 |
| C1V500/C1V10 | 1.65 |
| C4V100/C4V10 | 0.97 |
| C6V100/C6V10 | 0.90 |
| C4V100/C1V100 | 0.75 |
| C6V100/C1V100 | 0.68 |

Battery

<Example 6>

Example 6 provides a battery, and the anode thereof includes an anode material. The anode material includes a composition, and the composition includes a component particle and a dispersed particle, wherein the component particle includes a niobium-titanium complex oxide, and the dispersed particle includes a silicon-tin-iron complex oxide. The detail data of the battery of Example 6 is shown in Table 9.

| Table 9 | | | | | |
|---|---|---|---|---|---|
| | | | | | Example 6 |
| Composition | Component particle | Material | | | Niobium-titanium complex oxide |
| | | Weight ratio | | pWtn | 0.50 |
| | | Cumulative particle size (μm) | | tnD50 | - |
| | | Observed particle size (μm) | SDtn | SDtn1 | - |
| | | | | SDtn2 | - |
| | | | | SDtn3 | - |
| | | | | SDtn4 | - |
| | Dispersed particle | Material | | | Silicon-tin-iron complex oxide |
| | | Weight ratio | | pWen | 0.50 |
| | | Cumulative particle size (μm) | | enD50 | - |
| | | Observed particle size (μm) | SDen | SDen1 | - |
| | | | | SDen2 | - |
| | | | | SDen3 | - |
| | | | | SDen4 | - |
| | pWtn/pWen | | | | 1.00 |
| | Log(tnD50/enD50) | | | | - |

| Anode | Anode material | Composition | Weight ratio | pWo | 0.65 |
|---|---|---|---|---|---|
| | | Conductive agent | Weight ratio | pWc | 0.20 |
| | | Adhesive | Weight ratio | pWa | 0.15 |
| | | pWo/pWc | | | 3.25 |
| | | Density (g/cm$^3$) | | DSan | 1.09 |
| | | Thickness (µm) | | THan | 15.0 |
| | | Electric resistance (mΩ) | | Ran | 1.18 |
| | | Oxidation peak | First oxidation peak | Voltage (V) | Epa1 | 1.72 |
| | | | | Peak value (mAh/V) | Ipa1 | 1.00 |
| | | | Second oxidation peak | Voltage (V) | Epa2 | 1.54 |
| | | | | Peak value (mAh/V) | Ipa2 | 0.48 |
| | | Reduction peak | First reduction peak | Voltage (V) | Epc1 | 0.86 |
| | | | | Peak value (mAh/V) | Ipc1 | -1.18 |
| | | | Second reduction peak | Voltage (V) | Epc2 | 1.49 |
| | | | | Peak value (mAh/V) | Ipc2 | -0.44 |
| | | Epa1-Epc1 | | | 0.85 |
| | | Ipa1/Ipa2 | | | 2.06 |
| | | Ipc1/Ipc2 | | | 2.67 |
| | | |Ipa1/Ipc1| | | | 0.85 |
| Battery | C1V100/C1V10 | | | | 1.09 |
| | C1V500/C1V10 | | | | 1.28 |
| | C4V100/C4V10 | | | | - |
| | C6V100/C6V10 | | | | - |
| | C4V100/C1V100 | | | | - |
| | C6V100/C1V100 | | | | - |

<Example 7>

Example 7 provides a battery, and the anode thereof includes an anode material. The anode material includes a composition, and the composition includes a component particle and a dispersed particle, wherein the component particle includes a niobium-titanium complex oxide, and the dispersed particle includes a silicon-tin-iron complex oxide. The detail data of the battery of Example 7 is shown in Table 10.

| Table 10 | | | | | |
|---|---|---|---|---|---|
| | | | | | Example 7 |
| Composition | Component particle | Material | | | Niobium titanium complex oxide |
| | | Weight ratio | | pWtn | 0.70 |
| | | Cumulative particle size (μm) | | tnD50 | - |
| | | Observed particle size (μm) | SDtn | SDtn1 | - |
| | | | | SDtn2 | - |
| | | | | SDtn3 | - |
| | | | | SDtn4 | - |
| | Dispersed particle | Material | | | Silicon-tin-iron complex oxide |
| | | Weight ratio | | pWen | 0.30 |
| | | Cumulative particle size (μm) | | enD50 | - |
| | | Observed particle size (μm) | SDen | SDen1 | - |
| | | | | SDen2 | - |
| | | | | SDen3 | - |
| | | | | SDen4 | - |
| | pWtn/pWen | | | | 2.33 |
| | Log(tnD50/enD50) | | | | - |
| Anode | Anode material | Composition | Weight ratio | pWo | 0.65 |
| | | Conductive agent | Weight ratio | pWc | 0.20 |
| | | Adhesive | Weight ratio | pWa | 0.15 |
| | | pWo/pWc | | | 3.25 |
| | | Density (g/cm$^3$) | | DSan | 0.86 |
| | | Thickness (μm) | | THan | 14.0 |
| | | Electric resistance (mΩ) | | Ran | 1.19 |
| | | Oxidation peak | First oxidation peak | Voltage (V) | Epa1 | - |
| | | | | Peak value (mAh/V) | Ipa1 | - |
| | | | Second oxidation peak | Voltage (V) | Epa2 | - |
| | | | | Peak value (mAh/V) | Ipa2 | - |
| | | Reduction peak | First reduction peak | Voltage (V) | Epc1 | - |
| | | | | Peak value (mAh/V) | Ipc1 | - |

| | | | | | |
|---|---|---|---|---|---|
| | | | Second reduction peak | Voltage (V) | Epc2 | - |
| | | | | Peak value (mAh/V) | Ipc2 | - |
| | Epa1-Epc1 | | | | | - |
| | Ipa1/Ipa2 | | | | | - |
| | Ipc1/Ipc2 | | | | | - |
| | \|Ipa1/Ipc1\| | | | | | - |
| Battery | C1V100/C1V10 | | | | | - |
| | C1V500/C1V10 | | | | | - |
| | C4V100/C4V10 | | | | | - |
| | C6V100/C6V10 | | | | | - |
| | C4V100/C1V100 | | | | | - |
| | C6V100/C1V100 | | | | | - |

<Example 8>

Example 8 provides a battery, and the anode thereof includes an anode material. The anode material includes a composition, and the composition includes a component particle and a dispersed particle, wherein the component particle includes a niobium-titanium complex oxide, and the dispersed particle includes a silicon-copper-manganese complex oxide. The detail data of the battery of Example 8 is shown in Table 11.

| Table 11 | | | | | |
|---|---|---|---|---|---|
| | | | | | Example 8 |
| Composition | Component particle | Material | | | Niobium-titanium complex oxide |
| | | Weight ratio | | pWtn | 0.30 |
| | | Cumulative particle size (µm) | | tnD50 | - |
| | | Observed particle size (µm) | SDtn | SDtn1 | 5.12 |
| | | | | SDtn2 | 5.65 |
| | | | | SDtn3 | - |
| | | | | SDtn4 | - |
| | Dispersed particle | Material | | | Silicon-copper-manganese complex oxide |
| | | Weight ratio | | pWen | 0.70 |
| | | Cumulative particle size (µm) | | enD50 | - |
| | | Observed particle size (µm) | SDen | SDen1 | 1.80 |
| | | | | SDen2 | 2.23 |
| | | | | SDen3 | 1.56 |

|  |  |  |  |  | SDen4 | - |
|---|---|---|---|---|---|---|
|  |  |  | pWtn/pWen |  |  | 0.43 |
|  |  |  | Log(tnD50/enD50) |  |  | - |
| Anode | Anode material |  | Composition | Weight ratio | pWo | 0.65 |
|  |  |  | Conductive agent | Weight ratio | pWc | 0.20 |
|  |  |  | Adhesive | Weight ratio | pWa | 0.15 |
|  |  |  | pWo/pWc |  |  | 3.25 |
|  |  |  | Density (g/cm$^3$) |  | DSan | 0.91 |
|  |  |  | Thickness (μm) |  | THan | 14.0 |
|  |  |  | Electric resistance (mΩ) |  | Ran | 1.45 |
|  |  | Oxidation peak | First oxidation peak | Voltage (V) | Epa1 | 1.73 |
|  |  |  |  | Peak value (mAh/V) | Ipa1 | 0.60 |
|  |  |  | Second oxidation peak | Voltage (V) | Epa2 | 1.45 |
|  |  |  |  | Peak value (mAh/V) | Ipa2 | 0.38 |
|  |  | Reduction peak | First reduction peak | Voltage (V) | Epc1 | 0.38 |
|  |  |  |  | Peak value (mAh/V) | Ipc1 | -1.03 |
|  |  |  | Second reduction peak | Voltage (V) | Epc2 | 0.64 |
|  |  |  |  | Peak value (mAh/V) | Ipc2 | -0.30 |
|  |  |  | Epa1-Epc1 |  |  | 1.35 |
|  |  |  | Ipa1/Ipa2 |  |  | 1.57 |
|  |  |  | Ipc1/Ipc2 |  |  | 3.45 |
|  |  |  | \|Ipa1/Ipc1\| |  |  | 0.58 |
| Battery |  |  | C1V100/C1V10 |  |  | 1.11 |
|  |  |  | C1V500/C1V10 |  |  | 2.25 |
|  |  |  | C4V100/C4V10 |  |  | - |
|  |  |  | C6V100/C6V10 |  |  | - |
|  |  |  | C4V100/C1V100 |  |  | - |
|  |  |  | C6V100/C1V100 |  |  | - |

<Example 9>

Example 9 provides a battery, and the anode thereof includes an anode material. The anode material includes a composition, and the composition includes a component particle and a dispersed particle, wherein the component particle includes a niobium-titanium complex oxide, and the dispersed particle includes a silicon-copper-manganese complex oxide. The detail data of the battery of Example 9 is shown in Table 12.

| Table 12 | | | | |
|---|---|---|---|---|
| | | | | Example 9 |
| Composition | Component particle | Material | | | Niobium-titanium complex oxide |
| | | Weight ratio | | pWtn | 0.50 |
| | | Cumulative particle size (µm) | | tnD50 | - |
| | | Observed particle size (µm) | SDtn | SDtn1 | 7.53 |
| | | | | SDtn2 | - |
| | | | | SDtn3 | - |
| | | | | SDtn4 | - |
| | Dispersed particle | Material | | | Silicon-copper-manganese complex oxide |
| | | Weight ratio | | pWen | 0.50 |
| | | Cumulative particle size (µm) | | enD50 | - |
| | | Observed particle size (µm) | SDen | SDen1 | 1.51 |
| | | | | SDen2 | - |
| | | | | SDen3 | - |
| | | | | SDen4 | - |
| | pWtn/pWen | | | | 1.00 |
| | Log(tnD50/enD50) | | | | - |
| Anode | Anode material | Composition | Weight ratio | pWo | 0.65 |
| | | Conductive agent | Weight ratio | pWc | 0.20 |
| | | Adhesive | Weight ratio | pWa | 0.15 |
| | | pWo/pWc | | | 3.25 |
| | | Density (g/cm$^3$) | | DSan | 1.06 |
| | | Thickness (µm) | | THan | 14.0 |
| | | Electric resistance (mΩ) | | Ran | 1.13 |
| | | Oxidation peak | First oxidation peak | Voltage (V) | Epa1 | 1.70 |
| | | | | Peak value (mAh/V) | Ipa1 | 1.02 |
| | | | Second oxidation peak | Voltage (V) | Epa2 | 1.44 |
| | | | | Peak value (mAh/V) | Ipa2 | 0.53 |
| | | Reduction peak | First reduction | Voltage (V) | Epc1 | 0.42 |

| | | peak | Peak value (mAh/V) | Ipc1 | -1.07 |
| | | Second reduction peak | Voltage (V) | Epc2 | 0.39 |
| | | | Peak value (mAh/V) | Ipc2 | -1.04 |
| | Epa1-Epc1 | | | | 1.28 |
| | Ipa1/Ipa2 | | | | 1.92 |
| | Ipc1/Ipc2 | | | | 1.03 |
| | |Ipa1/Ipc1| | | | | 0.95 |
| Battery | C1V100/C1V10 | | | | 1.20 |
| | C1V500/C1V10 | | | | 1.93 |
| | C4V100/C4V10 | | | | - |
| | C6V100/C6V10 | | | | - |
| | C4V100/C1V100 | | | | - |
| | C6V100/C1V100 | | | | - |

<Example 10>

Example 10 provides a battery, and the anode thereof includes an anode material. The anode material includes a composition, and the composition includes a component particle and a dispersed particle, wherein the component particle includes a niobium-titanium complex oxide, and the dispersed particle includes a silicon-copper-manganese complex oxide. The detail data of the battery of Example 10 is shown in Table 13.

| Table 13 | | | | | |
| --- | --- | --- | --- | --- | --- |
| | | | | | Example 10 |
| Composition | Component particle | Material | | | Niobium-titanium complex oxide |
| | | Weight ratio | | pWtn | 0.70 |
| | | Cumulative particle size (µm) | | tnD50 | - |
| | | Observed particle size (µm) | SDtn | SDtn1 | 5.15 |
| | | | | SDtn2 | - |
| | | | | SDtn3 | - |
| | | | | SDtn4 | - |
| | Dispersed particle | Material | | | Silicon-copper-manganese complex oxide |
| | | Weight ratio | | pWen | 0.30 |
| | | Cumulative particle size (µm) | | enD50 | - |

| | | | | SDen1 | - |
|---|---|---|---|---|---|
| | | Observed particle size (µm) | SDen | SDen2 | - |
| | | | | SDen3 | - |
| | | | | SDen4 | - |
| | | pWtn/pWen | | | 2.33 |
| | | Log(tnD50/enD50) | | | - |
| Anode | Anode material | Composition | Weight ratio | pWo | 0.65 |
| | | Conductive agent | Weight ratio | pWc | 0.20 |
| | | Adhesive | Weight ratio | pWa | 0.15 |
| | | pWo/pWc | | | 3.25 |
| | | Density (g/cm$^3$) | | DSan | 1.17 |
| | | Thickness (µm) | | THan | 14.0 |
| | | Electric resistance (mΩ) | | Ran | 1.04 |
| | | Oxidation peak | First oxidation peak | Voltage (V) | Epa1 | 1.69 |
| | | | | Peak value (mAh/V) | Ipa1 | 1.09 |
| | | | Second oxidation peak | Voltage (V) | Epa2 | 1.43 |
| | | | | Peak value (mAh/V) | Ipa2 | 0.44 |
| | | Reduction peak | First reduction peak | Voltage (V) | Epc1 | 1.57 |
| | | | | Peak value (mAh/V) | Ipc1 | -0.45 |
| | | | Second reduction peak | Voltage (V) | Epc2 | 0.39 |
| | | | | Peak value (mAh/V) | Ipc2 | -0.48 |
| | | Epa1-Epc1 | | | 0.12 |
| | | Ipa1/Ipa2 | | | 2.49 |
| | | Ipc1/Ipc2 | | | 0.93 |
| | | |Ipa1/Ipc1| | | | 2.42 |
| Battery | | C1V100/C1V10 | | | 1.15 |
| | | C1V500/C1V10 | | | 1.40 |
| | | C4V100/C4V10 | | | - |
| | | C6V100/C6V10 | | | - |
| | | C4V100/C1V100 | | | - |
| | | C6V100/C1V100 | | | - |

**Claims**

1. A composition, **characterized in** comprising:

   a component particle and a dispersed particle, and the component particle and the dispersed particle being respectively an active material;
   wherein the component particle comprises a niobium-titanium complex oxide, and the niobium-titanium complex oxide comprises a niobium element and a titanium element;
   wherein the dispersed particle comprises a structural element oxide, the structural element oxide comprises a structural element, and the structural element is selected at least two from a group consisting of a cobalt, a copper, a tin, a silicon, an iron, a manganese and a nickel.

2. The composition of claim 1, wherein the composition comprises at least two oxidation peaks or at least two reduction peaks in a voltage range of 0.05 V to 4.00 V.

3. The composition of claims 1 or 2, wherein a weight ratio of the component particle in the composition is pWtn, a weight ratio of the dispersed particle in the composition is pWen, and the following condition is satisfied:

$$0.20 \leq pWtn/pWen \leq 5.00.$$

4. The composition of any one of claims 1 to 3, wherein a cumulative particle size of the component particle is tnD50, a cumulative particle size of the dispersed particle is enD50, and the following condition is satisfied:

$$0.05 \leq Log(tnD50/enD50) \leq 2.50.$$

5. The composition of any one of claims 1 to 4, wherein the structural element is selected at least two of the copper, the tin, the silicon, the iron and the manganese.

6. The composition of any one of claims 1 to 5, wherein the structural element is selected at least three of the copper, the tin, the silicon, the iron and the manganese.

7. An anode, **characterized in** comprising:
   an anode material comprising the composition of any one of claims 1 to 6 and a conductive agent.

8. The anode of claim 7, wherein a weight ratio of the composition in the anode material is pWo, a weight ratio of the conductive agent in the anode material is pWc, and the following condition is satisfied:

$$2.80 \leq pWo/pWc \leq 3.80.$$

9. The anode of claims 7 or 8, wherein the anode material comprises at least two oxidation peaks or at least two reduction peaks in a voltage range of 0.20 V to 3.00 V.

10. The anode of any one of claims 7 to 9, wherein the anode material comprises at least two oxidation peaks in a voltage range of 1.00 V to 2.50 V, and the anode material comprises at least two reduction peaks in a voltage range of 0.20 V to 2.00 V.

11. The anode of any one of claims 7 to 10, wherein a peak value of a first oxidation peak of the anode material is Ipa1, a peak value of a second oxidation peak of the anode material is Ipa2, and the following condition is satisfied:

$$0.50 \leq Ipa1/Ipa2 \leq 5.00.$$

12. The anode of any one of claims 7 to 11, wherein a peak value of a first reduction peak of the anode material is Ipc1, a peak value of a second reduction peak of the anode material is Ipc2, and the following condition is satisfied:

$$1.50 \leq Ipc1/Ipc2 \leq 8.00.$$

13. The anode of any one of claims 7 to 12, wherein a density of the anode material is DSan, and the following condition is satisfied:

$$0.40 \text{ g/cm}^3 \leq DSan \leq 1.80 \text{ g/cm}^3.$$

14. The anode of any one of claims 7 to 13, wherein a thickness of the anode material is THan, an electric resistance of the anode material is Ran, and the following conditions are satisfied:

$$1.0 \text{ μm} \leq THan \leq 70.0 \text{ μm};$$

and

$$0.50 \text{ mΩ} \leq Ran \leq 50.00 \text{ mΩ}.$$

15. A battery, **characterized in** comprising:
the anode of any one of claims 7 to 14.

16. The battery of claim 15, wherein a discharge volumetric capacity of a tenth cycle of the battery with a current of 1 C for charging and discharging is C1V10, a discharge volumetric capacity of a one-hundredth cycle of the battery with the current of 1 C for charging and discharging is C1V100, and the following condition is satisfied:

$$0.50 \leq C1V100/C1V10 \leq 1.80.$$

17. The battery of claims 15 or 16, wherein a discharge volumetric capacity of a tenth cycle of the battery with a current of 1 C for charging and discharging is C1V10, a discharge volumetric capacity of a five-hundredth cycle of the battery with the current of 1 C for charging and discharging is C1V500, and the following condition is satisfied:

$$0.50 \leq C1V500/C1V10 \leq 2.50.$$

18. The battery of any one of claims 15 to 17, wherein a discharge volumetric capacity of a tenth cycle of the battery with a current of 4 C is C4V10, a discharge volumetric capacity of a one-hundredth cycle of the battery with the current of 4 C for charging and discharging is C4V100, and the following condition is satisfied:

$$0.50 \leq C4V100/C4V10 \leq 1.50.$$

19. The battery of any one of claims 15 to 18, wherein a discharge volumetric capacity of a tenth cycle of the battery with a current of 6 C is C6V10, a discharge volumetric capacity of a one-hundredth cycle of the battery with the current of 6 C for charging and discharging is C6V100, and the following condition is satisfied:

$$0.50 \leq C6V100/C6V10 \leq 1.50.$$

20. A composition, **characterized in** comprising:

a component particle and a dispersed particle, and the component particle and the dispersed particle being respectively an active material;
wherein the component particle comprises a niobium-titanium complex oxide, and the niobium-titanium complex oxide comprises a niobium element and a titanium element;
wherein the dispersed particle comprises a structural element complex oxide, and the structural element complex oxide comprises at least three structural elements.

21. The composition of claim 20, wherein a weight ratio of the component particle in the composition is pWtn, a weight ratio of the dispersed particle in the composition is pWen, and the following condition is satisfied:

$$0.20 \leq pWtn/pWen \leq 5.00.$$

22. The composition of claims 20 or 21, wherein an observed particle size of the component particle is SDtn, an observed particle size of the dispersed particle is SDen, and the following conditions are satisfied:

$$0.50 \ \mu m \leq SDtn \leq 50.00 \ \mu m;$$

and

$$0.01 \ \mu m \leq SDen \leq 5.00 \ \mu m.$$

23. The composition of any one of claims 20 to 22, wherein the at least three structural elements are selected from a group consisting of a cobalt, a copper, a tin, a silicon, an iron, a manganese and a nickel.

24. The composition of any one of claims 20 to 23, wherein the structural element complex oxide is selected at least one from a group consisting of a silicon-tin-iron complex oxide, a silicon-copper-manganese complex oxide, a tin-copper-cobalt complex oxide, a tin-manganese-nickel complex oxide, a copper-manganese-nickel complex oxide and a copper-tin-nickel complex oxide.

25. An anode, **characterized in** comprising:
an anode material comprising the composition of any one of claims 20 to 24.

26. The anode of claim 25, wherein the anode material comprises at least two oxidation peaks in a voltage range of 1.00 V to 2.50 V, and the anode material comprises at least two reduction peaks in a voltage range of 0.20 V to 2.00 V.

27. The anode of claims 25 or 26, wherein a voltage of a first oxidation peak of the anode material is Epa1, and the following condition is satisfied:

$$1.50 \ V \leq Epa1 \leq 2.00 \ V.$$

28. The anode of any one of claims 25 to 27, wherein a voltage of a first reduction peak of the anode material is Epc1, and the following condition is satisfied:

$$0.20 \ V \leq Epc1 \leq 1.20 \ V.$$

29. The anode of any one of claims 25 to 28, wherein a voltage of a first oxidation peak of the anode material is Epa1, a voltage of a first reduction peak of the anode material is Epc1, and the following condition is satisfied:

$$0.40 \ V \leq Epa1\text{-}Epc1 \leq 1.80 \ V.$$

30. The anode of any one of claims 25 to 29, wherein a peak value of a first oxidation peak of the anode material is Ipa1, a peak value of a first reduction peak of the anode material is Ipc1, and the following condition is satisfied:

$$0.30 \leq |Ipa1/Ipc1| \leq 1.50.$$

31. A battery, **characterized in** comprising:
the anode of any one of claims 25 to 30.

32. The battery of claim 31, wherein a discharge volumetric capacity of a one-hundredth cycle of the battery with a current of 1 C for charging and discharging is C1V100, a discharge volumetric capacity of a one-hundredth cycle of the battery with a current of 4 C for charging and discharging is C4V100, and the following condition is satisfied:

$$0.50 \leq C4V100/C1V100 \leq 1.20.$$

33. The battery of claims 31 or 32, wherein a discharge volumetric capacity of a one-hundredth cycle of the battery with a current of 1 C for charging and discharging is C1V100, a discharge volumetric capacity of a one-hundredth cycle of the battery with a current of 6 C for charging and discharging is C6V100, and the following condition is satisfied:

$$0.30 \leq C6V100/C1V100 \leq 1.20.$$

Fig. 1

Fig. 2

EP 4 636 839 A2

Fig. 3A

Fig. 3B

44

Fig. 4B

Fig. 4A

Fig. 4C

Fig. 4D

EP 4 636 839 A2

EP 4 636 839 A2

Fig. 4E

Fig. 4F

Fig. 4G

EP 4 636 839 A2